(19) Europäisches Patentamt
European Patent Office
Office européen des brevets

(11) EP 2 879 447 A1

# (12) EUROPEAN PATENT APPLICATION
published in accordance with Art. 153(4) EPC

(43) Date of publication:
**03.06.2015 Bulletin 2015/23**

(21) Application number: **12881888.7**

(22) Date of filing: **26.07.2012**

(51) Int Cl.:
***H04W 56/00*** *(2009.01)* ***H04W 74/08*** *(2009.01)*

(86) International application number:
**PCT/JP2012/069019**

(87) International publication number:
**WO 2014/016944 (30.01.2014 Gazette 2014/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FUJITSU LIMITED**
**Kawasaki-shi**
**Kanagawa 211-8588 (JP)**

(72) Inventor: **TANAKA, Yoshinori**
**Kawasaki-shi**
**Kanagawa 211-8588 (JP)**

(74) Representative: **Cooper-Rolfe, Elizabeth Louise**
**Haseltine Lake LLP**
**Lincoln House, 5th Floor**
**300 High Holborn**
**London WC1V 7JH (GB)**

## (54) BASE STATION DEVICE, MOBILE STATION DEVICE, COMMUNICATION SYSTEM, AND COMMUNICATION METHOD

(57) A base station device includes a group generating part configured to group together mobile station devices, a correction amount calculating part configured to use a reception timing of a monitoring signal transmitted from a first mobile station device in a group generated by the group generating part as the basis to calculate a timing correction amount of uplink transmission timing, and a correction amount transmitting part configured to transmit a timing correction amount calculated based on the reception timing of the monitoring signal transmitted from the first mobile station device as a correction amount of uplink transmission timing in a second mobile station device different from the first mobile station device in the group.

FIG.2

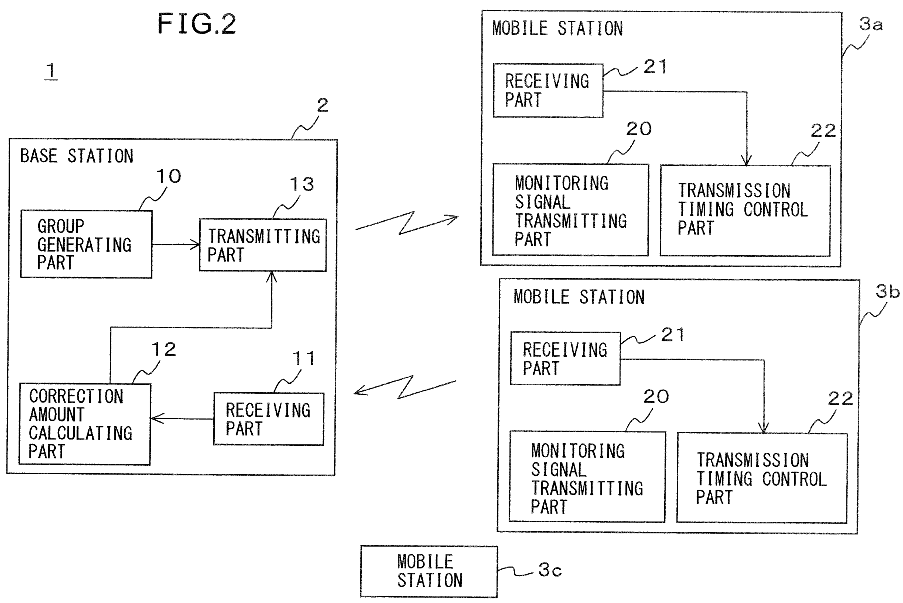


EP 2 879 447 A1

## Description

### TECHNICAL FIELD

The embodiments which are discussed in this Description relate to a base station device, mobile station device, communication system, and communication method.

### BACKGROUND ART

At the present time, mobile phone systems, wireless LANs (Local Area Networks), and other radio communication systems are being widely used. Further, in the field of radio communications, the next generation of communications technology is being constantly discussed so as to further improve communication speeds and communication capacities. As the next generation of communications technology, for example, the LTE (Long Term Evolution), LTE-Advanced, and other standards have been completed or are being studied.

In the LTE and LTE-Advanced, as the modulation scheme for downlink communication from a base station device to a mobile station device, OFDM (Orthogonal Frequency Division Multiplexing) is being employed. OFDM, for example, is a communication scheme which divides a frequency band into a large number of frequency bands or subcarriers and maps information data on the orthogonal frequency bands.

On the other hand, as the modulation scheme for uplink communication from a mobile station device to a base station device, SC-FDMA (Single-Carrier Frequency-Division Multiple Access) is being employed. SC-FDMA, for example, is a communication scheme which divides a frequency band and uses different frequency bands for transmission with a plurality of mobile station devices. SC-FDMA is single carrier transmission compared with OFDM, so can lower the PAPR (Peak to Average Power Ratio). Therefore, SC-FDMA, compared to CDMA, can lower the power consumption of an amplifier and can cut the power consumption of a mobile station apparatus as a whole.

In SC-FDMA, for example, the receiving side, that is, the base station apparatus, can perform waveform equalization to suppress propagation distortion on wireless channels. Further, for example, a mobile station apparatus can cyclically insert a CP (cyclic prefix) to the transmission signal to enable the base station apparatus to perform waveform equalization in the frequency domain. Further, by insertion of a CP, the amount of processing at the frequency domain at the base station apparatus can be made smaller than that at the time domain. However, if the timing difference of the reception signals is larger than the CP length, for example, orthogonality can no longer be held between reception signals, interference will occur between signals, and the quality of reception will fall compared with the case where the timing difference of reception signals is within the CP length. Therefore, in a transmission station apparatus, to prevent offset in timing of the reception signals, the transmission timing is controlled for each mobile station apparatus.

FIG. 23 is a flowchart which illustrates an example of the operation of transmission timing control. A mobile station apparatus UE (User Equipment) transmits to a base station apparatus eNB (evolved Node B) a data signal or pilot signal (Sounding Reference Signal: SRS) (S110). The base station apparatus eNB measures the frame timing difference of the transmitted frames and received frames of the data signal (S111), makes the measured value the transmission timing correction amount $N_{TA}$, and feeds back this transmission timing correction amount $N_{TA}$ as a control signal (S112).

FIG. 24 is a view which illustrates an example of the difference between the frame timing of a base station apparatus eNB (downlink transmission timing) and the frame timing of a mobile station apparatus UE (uplink transmission timing). The mobile station apparatus UE which receives a control signal from the base station apparatus eNB adds a fixed value $N_{TAoffset}$ to the transmission timing correction amount $N_{TA}$, further multiplies this with a fixed value Ts, and uses exactly the resultant time period to transmit a signal earlier than the frame timing grasped by the mobile station apparatus UE itself. Due to this, the base station eNB can receive a data signal which was transmitted from a mobile station apparatus UE by a timing synchronized with the frame timing.

### PRIOR ART DOCUMENTS

#### Nonpatent Documents

NPLT 1: 3GPP TS 36.211 V9.1.0
NPLT 2: 3GPP TS 36.212 V9.1.0
NPLT 3: 3GPP TS 36.213 V9.1.0
NPLT 4: 3GPP TS 36.913
NPLT 5: 3GPP TS 36.814

## SUMMARY

### Technical Problem

If the number of mobile station devices which are connected to a base station apparatus increases, the number of times of transmission of signals over the uplink which are used for measurement of the amount of correction of the transmission timing will increase and the overhead of the control signals will be liable to increase. The devices and method which are disclosed in the present description have as their objects to keep down the increase in overhead of the control signals for control of the transmission timing which occurs along with an increased number of mobile station devices.

### Solution to Problem

According to one aspect of an apparatus, a base station apparatus is provided. The base station apparatus is provided with a group generating part configured to group together mobile station devices, a correction amount calculating part configured to use a reception timing of a monitoring signal transmitted from a first mobile station apparatus in a group formed by the group generating part as the basis to calculate a timing correction amount of uplink transmission timing, and a correction amount transmitting part configured to transmit a timing correction amount calculated based on the reception timing of the monitoring signal transmitted from the first mobile station apparatus as a correction amount of uplink transmission timing in a second mobile station apparatus different from the first mobile station apparatus in the group.

According to one aspect of an apparatus, a mobile station apparatus is provided. The mobile station apparatus is provided with a correction amount receiving part configured to receive a timing correction amount calculated based on a reception timing at which a base station apparatus received a monitoring signal transmitted from a second mobile station apparatus different from that mobile station apparatus and a transmission timing control part configured to use the received timing correction amount as the basis to control an uplink transmission timing.

According to another aspect of an apparatus, a communication system including mobile station devices and a base station apparatus is provided. The communication system is provided with a group generating part configured to group together mobile station devices, a correction amount calculating part configured to use a reception timing at which the base station apparatus receives a monitoring signal transmitted from a first mobile station apparatus in a group generated by the group generating part as the basis to calculate a timing correction amount of uplink transmission timing, and a correction amount transmitting part configured to transmit a timing correction amount calculated based on the reception timing of the monitoring signal transmitted from the first mobile station apparatus as a correction amount of uplink transmission timing in a second mobile station apparatus which is different from the first mobile station apparatus in the group.

According to one aspect of a method, a communication method is provided. The communication method comprises grouping together mobile station devices, using a reception timing at which a base station apparatus receives a monitoring signal transmitted from a first mobile station apparatus in a group of mobile station devices as the basis to calculate a timing correction amount of uplink transmission timing, and transmitting a timing correction amount calculated based on the reception timing of the monitoring signal transmitted from the first mobile station apparatus as a correction amount of uplink transmission timing in a second mobile station apparatus which is different from the first mobile station apparatus in the group.

### Advantageous Effects

According to the devices and method which are disclosed in the present description, the increase in overhead of the control signals for control of the transmission timing which occurs along with an increased number of mobile station devices is kept down.

The object and advantages of the invention will be realized and attained by means of the elements and combinations particularly pointed out in the appended claims. Both the above-mentioned general description and the following detailed description are mere illustrations and explanations and should be understood as not limiting the invention in a manner like the claims.

## BRIEF DESCRIPTION OF DRAWINGS

FIG. 1 is an explanatory view of an example of the configuration of a communication system.

FIG. 2 is a view of the functional configuration of a first example of a base station apparatus and mobile station devices.
FIG. 3 is a view of the functional configuration of a second example of a base station apparatus and mobile station devices.
FIG. 4 is a view of the functional configuration of a third example of a base station apparatus.
FIG. 5 is a view of the functional configuration of a third example of a mobile station apparatus.
FIG. 6 is a graph which illustrates an example of distribution of TA values.
FIG. 7 is a sequence diagram which illustrates an example of an overall operation of a communication system.
FIG. 8 is an explanatory view of an example of operation of a base station apparatus.
FIGS. 9A and 9B are views which illustrate examples of allocation of radio resources.
FIG. 10 is an explanatory view of an example of operation of a mobile station apparatus.
FIG. 11 is a view which illustrates an example of a state in which transmission timings are controlled all together.
FIG. 12 is a graph which illustrates an example of distribution of an amount of fluctuation over time ΔTA of TA values.
FIG. 13 is a view which illustrates part of an example of the configuration of report information.
FIGS. 14A and 14B are views which illustrate examples of allocation of radio resources.
FIG. 15 is an explanatory view of an example of operation of a mobile station apparatus.
FIGS. 16A and 16B are views which respectively illustrate examples of allocation of radio resources.
FIGS. 17A and 17B are views which respectively illustrate examples of allocation of radio resources.
FIG. 18 is a sequence diagram which illustrates an example of an overall operation of a communication system.
FIG. 19 is an explanatory view of an example of operation of a base station apparatus.
FIG. 20 is an explanatory view of an example of operation of a mobile station apparatus.
FIG. 21 is an explanatory view of one example of a hardware configuration of a base station apparatus.
FIG. 22 is an explanatory view of one example of a hardware configuration of a mobile station apparatus. FIG. 23 is a sequence diagram which illustrates an example of operation of control of transmission timing. FIG. 24 is a view which illustrates an example of a difference in frame timing between a received frame and a transmitted frame.

## DESCRIPTION OF EMBODIMENTS

### 1. First Embodiment

#### 1.1. Example of Configuration of Communication System

Below, referring to the attached drawings, a preferable embodiment will be explained. FIG. 1 is an explanatory view of an example of configuration of a communication system. The communication system 1 is provided with a base station apparatus 2 and mobile station devices 3a to 3f. In the following explanation and attached drawings, the base station device and mobile station devices will sometimes be respectively referred to as the "base station" and "mobile stations". Further, the mobile stations 3a to 3f will sometimes be referred to all together as the "mobile stations 3".

The base station 2 is a radio communication device which wirelessly connects with the mobile stations 3 for radio communication. Further, the base station 2 may provide various services such as voice communication or video distribution to mobile stations 3 in one or more cell regions. Furthermore, the base station 2 may control the transmission timings of the mobile stations 3.

The mobile stations 3 are radio communication devices which wirelessly connect with the base station 2 for radio communication. The mobile stations 3 may, for example, be mobile phones or portable information terminals. The mobile stations 3 may receive data signals from the base station 2 and transmit data signals to the base station 2. In this Description, a communication link from the base station 2 to the mobile stations 3 will sometimes be referred to as a "downlink" (DL), while a communication link from the mobile stations 3 to the base station 2 will sometimes be referred to as an "uplink" (UL).

The base station 2 groups together the mobile stations 3a to 3f. For example, as illustrated in FIG. 1, the base station 2 forms a group 4a which includes the mobile stations 3a to 3c and a group 4b which includes the mobile stations 3d and 3e. The mobile station 3f is a mobile station which does not belong to any group. In the following explanation and the attached drawings, a mobile station which does not belong to any group will sometimes be referred to as a "nonmember mobile station".

The base station 2 determines a common transmission timing correction amount for each group and transmits the common transmission timing correction amount to the mobile stations 3 which belong to each group. The mobile stations which belong to a group control the transmission timings of radio signals which are transmitted to the base station in accordance with the transmission timing correction amount which is determined for that group.

1.2. Functional Configuration

FIG. 2 is a view of the functional configuration of a first example of the base station 2 and mobile stations 3. The base station 2 is provided with a group generating part 10, a receiving part 11, a correction amount calculating part 12, and a transmitting part 13. The mobile station 3a is provided with a monitoring signal transmitting part 20, a receiving part 21, and a transmission timing control part 22. The mobile stations 3b and 3c may be configured in the same way as the mobile station 3a.

The group generating part 10 groups together a plurality of mobile stations 3a to 3c which can use the same transmission timing correction amount for control. The receiving part 11 receives a monitoring signal which is transmitted from one mobile station 3a of the same group. The correction amount calculating part 12 uses the reception timing of the monitoring signal as the basis to calculate the transmission timing correction amount. The transmitting part 13 transmits the transmission timing correction amount calculated based on the monitoring signal transmitted from the mobile station 3a to the grouped together plurality of mobile station devices 3a to 3c.

The monitoring signal transmitting part 20 of the mobile station 3a transmits the monitoring signal to the base station 2. The receiving part 21 of the mobile station 3b receives the transmission timing correction amount calculated based on the monitoring signal transmitted from the mobile station 3a from the base station 2. The transmission timing control part 22 controls the transmission timing of the radio signal which is transmitted to the base station 2 in accordance with the received transmission timing correction amount. The mobile stations 3a and 3c operate in the same way as the mobile station 3b.

1.3. Advantageous Effects

The base station 2 uses the transmission timing of a monitoring signal which is transmitted from one mobile station 3a in a grouped together plurality of mobile stations 3 as the basis to determine a transmission timing correction amount which is used in common by the group. For this reason, compared with when a group of mobile stations 3 individually transmit monitoring signals, the overhead of the control signals in the uplink is reduced. The mobile stations 3b and 3c which do not transmit monitoring signals can receive transmission timing correction amounts even without transmitting monitoring signals which are used for calculation of the transmission timing correction amounts and can therefore maintain synchronization of the uplink.

Further, since the mobile stations 3 which transmit monitoring signals are reduced, the power consumptions of the mobile stations 3 are also reduced. The number of mobile stations 3 which transmit monitoring signals is not necessarily one, but may be smaller than the total number of mobile stations 3 which belong to the group.

In a communication mode with a large number of mobile stations such as M2M (Machine to Machine) communication, the increase in overhead of the control signals on the uplink over which the mobile stations 3 transmit signals can be kept down. Further, in M2M communication, the speeds of movement of the mobile stations 3 are low, so the formed groups are easy to maintain. For this reason, by using the same monitoring signal in common in a group, it is possible to efficiently reduce the overhead of control signals for control of the uplink transmission timing.

2. Second Embodiment

Next, another embodiment of the communication system 1 will be explained. FIG. 3 is a view of the functional configuration of a second example of the base station 2 and mobile stations 3. Component elements similar to the component elements which are illustrated in FIG. 2 will be assigned the same reference notations as the reference notations which are used in FIG. 2 and explanations of the same functions will be omitted.

The base station 2 is provided with a designating part 14 and an instruction signal generating part 15. The designating part 14 designates any mobile station 3 belonging to the group for each group which the group generating part 10 generates. The instruction signal generating part 15 generates an instruction signal which makes the mobile station 3 which was designated by the designating part 14 transmit a monitoring signal. The transmitting part 13 transmits the instruction signal.

The instruction signal, for example, may be an identifier of the mobile station 3a for notifying the mobile stations 3 of the mobile station 3a which was designated by the designating part 14. Another example of the instruction signal may be an instruction signal, which is individually transmitted to the mobile station 3a which was designated by the designating part 14 and makes the mobile station 3a transmit a monitoring signal. The receiving part 21 of the mobile station 3a receives the instruction signal. The monitoring signal transmitting part 20 of the mobile station 3a transmits a monitoring signal in accordance with the instruction signal.

According to this embodiment, the mobile station 3a which is made to transmit the monitoring signal is clearly designated by the base station 2, so the other mobile stations 3b and 3c can stop transmission of monitoring signals for calculation of the transmission timing correction amounts. For this reason, compared to a case where a group of mobile stations 3 individually transmit monitoring signals, the overhead of the control signals in the uplink is reduced. Further, the power consumptions of the mobile stations 3 which do not transmit the monitoring signals are reduced.

## 3. Third Embodiment

### 3.1. Functional Configuration

Next, another embodiment of a communication system 1 will be explained. FIG. 4 is a view of the functional configuration of a third example of the base station 2. The base station 2 is provided with a radio resource control part 101, MAC (Media Access Control) control part 102, packet generating part 103, MAC scheduling part 104, coding part 105, modulating part 106, and multiplexing part 107. The base station 2 is specifically provided with an IFFT (Inverse Fast Fourier Transform) part 108, radio processing part 109, transmission antenna 110, reception antenna 111, radio processing part 112, FFT part 113, demodulating part 114, decoding part 115, and RLC (Radio Link Control) part 116. The base station 2 is provided with a TA (Timing Advance) value calculating part 117, group generating part 118, designating part 119, and instruction signal generating part 120.

The group generating part 118 is one example of the group generating part 10 of FIG. 2 and FIG. 3. The TA value calculating part 117 is one example of the correction amount calculating part 12. The radio resource control part 101, MAC control part 102, multiplexing part 107, IFFT part 108, radio processing part 109, and transmission antenna 110 are an example of the transmitting part 13. The reception antenna 111, radio processing part 112, and FFT part 1113 are an example of the receiving part 11. The designating part 119 and instruction signal generating part 120 are examples of the designating part 14 and instruction signal generating part 15.

The radio resource control part 101 allocates radio resources, for example, frequency and time, for downlink communication and uplink communication of the mobile stations 3. Further, the radio resource control part 101 allocates various types of RNTIs (Radio Network Temporary IDs). For example, the radio resource control part 101 uses information relating to the groups which is output from the group generating part 118 as the basis to allocate a G-RNTI (Group-RNTI)to a group which the group generating part 118 generates. The G-RNTI is, for example, an RNTI for control of the transmission timing which is allocated to the plurality of mobile stations 3 which belong to the same group and is an example of a group identifier which identifies a group which the group generating part 118 generates. Details of the G-RNTI will be explained later.

The radio resource control part 101 outputs resource allocation information etc. relating to allocated radio resources to the MAC control part 102. Further, the radio resource control part 101, for example, outputs the generated G-RNTI as RRC (Radio Resource Control) information to the packet generating part 103. In this case, the G-RNTI is transmitted to the mobile stations 3 using a PDSCH (Physical Downlink Shared Channel). Furthermore, the radio resource control part 101 may generate report information or paging information and output it to the packet generating part 103. The report information and the paging information will be explained in the fifth embodiment and sixth embodiment.

The MAC control part 102 uses the resource allocation information which was output from the radio resource control part 101 as the basis to generate individual control information which it then outputs to the multiplexing part 107. The individual control information is, for example, transmitted as a control signal to a mobile station 3 using a PDCCH (Physical Downlink Control Channel) or other control channel.

Further, the MAC control part 102 receives a random access preamble which is transmitted from the mobile stations 3 in the random access routine from the FFT part 113. The MAC control part 102 outputs a transmission message to the mobile stations 3 which are determined in the random access routine to the multiplexing part 107.

Further, the MAC control part 102 sometimes receives a G-RNTI which is output from the radio resource control part 101. In such a case, the MAC control part 102 may output the G-RNTI as individual control information to the multiplexing part 107. Furthermore, the MAC control part 102 may receive information relating to groups which was generated at the group generating part 118 through the radio resource control part 101 and, when receiving such information, can generate a group TA value to generate a TA command. The group TA value, for example, is a TA value which is given to the plurality of mobile stations 3 which belong to the same group. Details will be explained later.

Further, the MAC control part 102 can receive an instruction signal which is generated at the instruction signal generating part 120 through the radio resource control part 101. The instruction signal is, for example, a signal which designates a representative mobile station which represents a group among the mobile stations which belong to that group. The radio resource control part 101 outputs the instruction signal to the packet generating part 103.

The packet generating part 103 receives as input the user data and various types of control information, the group TA value, instruction signal and generates transmission packets. The transmission packets include user data and are for example transmitted by using the PDSCH. The packet generating part 103 outputs the generated packets to the MAC scheduling part 104.

The MAC scheduling part 104 uses the resource allocation information which is output from the MAC control part 102 as the basis to schedule user data. For example, the MAC scheduling part 104 allocates user data to the radio resources of the PDSCH, PUSCH, or other shared channel for scheduling. The MAC scheduling part 104 outputs the scheduled transmission packets to the coding part 105.

The coding part 105 codes the user data, control information in the packets by error correction coding. The coding scheme and coding rate of the error correction coding are included in the resource allocation information which the radio resource control part 101 generates. For example, the coding part 105 may receive the information from the radio resource control part 101 to perform error correction coding. The coding part 105 outputs the packets coded by error correction coding to the modulating part 106.

The modulating part 106 modulates the user data and control information in the packets coded by error correction coding by a modulation scheme such as QPSK (Quadrature Phase Shift Keying), 16QAM (Quadrature Amplitude Modulation). The modulation scheme is also included in the resource allocation information. The modulating part 106 may receive the resource allocation information from the radio resource control part 101 and perform the modulation. The modulating part 106 outputs the modulated packets to the multiplexing part 107.

The multiplexing part 107 multiplexes the output from the modulating part 106 and the pilot signal, individual control information, and transmission message for the random access routine and outputs the obtained multiplexed information to the IFFT part 108. For the pilot signal, for example, a preamble pattern which is known at the base station 2 and mobile stations 3 is used.

The IFFT part 108 processes the multiplexed signal by an Inverse Fast Fourier Transform to transform the frequency domain multiplexed signal to a time domain multiplexed signal and outputs the time domain multiplexed signal to the radio processing part 109. The radio processing part 109 transforms the baseband multiplexed signal to a wireless band radio signal for output. The transmission antenna 110 transmits the radio signal which was output from the radio processing part 109 to a mobile station 3. Due to this, the user data, individual control information are transmitted as a data signal and control signal to the mobile station 3.

The reception antenna 111 receives a radio signal transmitted from a mobile station 3. The radio processing part 112 transforms the wireless band radio signal received by the reception antenna 111 to a baseband reception signal.

The FFT part 113 processes the reception signal output from the radio processing part 112 by a Fast Fourier Transform to transform the time domain reception signal to a frequency domain reception signal. The FFT part 113 outputs the reception signal after processing by the Fast Fourier Transform to the demodulating part 114 and the TA value calculating part 117.

The demodulating part 114 demodulates the reception signal. The demodulation scheme corresponds to the modulation scheme for the radio signal transmitted by the mobile station 3 and, for example, follows the resource allocation information by the radio resource control part 101. For example, the demodulating part 114 receives the resource allocation information from the radio resource control part 101 and demodulates the signal in accordance with this resource allocation information.

The decoding part 115 decodes the demodulated reception signal by error correction decoding. The decoding scheme and coding rate of the error correction decoding are also, for example, based on the resource allocation information which is received from the radio resource control part 101. The RLC part 116 extracts the user data from the decoded reception signal. The extracted user data is transmitted to a higher level control device or otherwise output to another processing part.

The TA value calculating part 117 extracts the monitoring signal transmitted from a mobile station 3 from the reception signal output from the FFT part 113 and uses the reception timing of the monitoring signal as the basis to calculate the TA (Timing Advance) value of the mobile station 3. The monitoring signal may, for example, be a pilot signal, data signal, contention-free random access preamble, scheduling request signal. For example, the pilot signal may be an SRS signal. The scheduling request signal is a signal which is transmitted from the mobile station 3 for requesting scheduling to the base station 2 when uplink transmission data is generated.

The TA value is, for example, a value which expresses the difference between the frame timing of the transmitted frame and the frame timing of the received radio frame in the base station 2. The TA value calculating part 117 measures the TA value of a mobile station 3 by calculating the difference between the uplink radio frame timing which is received from the mobile station 3 and the transmitted frame timing of the base station 2. If there is a plurality of mobile stations 3, the TA value calculating part 117 measures a plurality of the TA values. For example, the TA value calculating part 117 outputs the calculated TA values as timing correction amounts $N_{TA}$ to the group generating part 118. The group generating part 118 receives the plurality of the TA values and groups together the mobile stations 3 with TA values in a certain range to generate groups.

FIG. 6 is a graph which illustrates an example of distribution of the TA values. The ordinate indicates the number of mobile stations, while the abscissa indicates the TA values. As illustrated in FIG. 6, there are places where when the TA values are certain values, the numbers of mobile stations 3 are greater than elsewhere. For example, when there are a plurality of mobile stations 3 on a train, the frame timings of the mobile stations 3 have amounts of error within a certain range, so for example the distribution such as illustrated in FIG. 6 results.

The group generating part 118, for example, groups together as one group the mobile stations 3 which have TA values within a certain range. Alternatively, the group generating part 118, for example, groups together into a group a plurality of mobile stations 3 which can be controlled by the same transmission timing control amount. In the example of FIG. 6, the group generating part 118 generates the "group 1" and the "group 2".

The group generating part 118, if forming groups, for example, holds identification information of the groups and identification information of the mobile stations 3 which belong to the groups as information relating to the groups in its internal memory or outputs them through the radio resource control part 101 to the MAC control part 102. Further, the group generating part 118 outputs the information relating to the groups to the designating part 119. Sometimes the identification information of the mobile stations 3 is, for example, included in the reception signals which are received from the mobile stations 3.Sometimes the RNTI and other identification information which the radio resource control part 101 allocates are used as the basis to obtain identification information of the mobile stations 3.

The designating part 119 uses information relating to the groups which was received from the group generating part 118 as the basis to designate a representative mobile station which represents each group from among the mobile stations 3 which belong to that group. For example, the designating part 119 may change the mobile station which is selected as the representative mobile station from the plurality of mobile stations 3 which belong to a group sequentially over time. As explained later, the representative mobile station consumes more power than other mobile stations since it transmits a monitoring signal, but by changing the representative mobile station in this way, it is possible to disperse the increase in power consumption among the plurality of mobile stations 3.

Further, the designating part 119 may designate the mobile station 3 which transmitted the uplink scheduling request signal as the representative mobile station for a certain time period after transmission of the scheduling request signal. The base station 2 may use the scheduling request signal to find the TA value, so the mobile station 3 which transmitted the scheduling request signal becomes the representative mobile station and therefore there is no longer a need to transmit another monitoring signal from another mobile station. In the following explanation, the case where the mobile station 3a is designated as the representative mobile station is assumed.

The instruction signal generating part 120 generates the mobile station identifier of the mobile station 3a as the instruction signal which makes the mobile station 3a designated by the designating part 119 transmit the monitoring signal. The representative mobile station 3a designated by the instruction signal, when receiving an instruction signal, repeatedly transmits a monitoring signal to the base station 2 to thereby enable the base station 2 to continuously calculate the TA value.

Next, a mobile station 3 will be explained. As illustrated in FIG. 5, the mobile station 3 is provided with an antenna 201, radio processing part 202, FFT part 203, demodulating part 204, decoding part 205, control channel demodulating part 206, and control information processing part 207. The mobile station 3 specifically is provided with a data processing part 208, multiplexing part 209, symbol mapping part 210, multiplexing part 211, FFT part 212, frequency mapping part 213, IFFT part 214, transmission timing control part 215, and radio processing part 216. Further, the mobile station 3 is provided with a pilot generating part 217 and preamble generating part 218.

The antenna 201, radio processing part 202, FFT part 203, demodulating part 204, decoding part 205, and control information processing part 207 are one example of the receiving part 21 of FIG. 2 and FIG. 3. The transmission timing control part 215 is one example of the transmission timing control part 22. The pilot generating part 217, preamble generating part 218, multiplexing part 211, FFT part 212, frequency mapping part 213, IFFT part 214, transmission timing control part 215, radio processing part 216, and antenna 201 are one example of the monitoring signal transmitting part 20.

The antenna 201 receives the radio signal which was transmitted from the base station 2 and outputs it to the radio processing part 202. Further, the antenna 201 may also transmit the radio signal output from the radio processing part 216 to the base station 2. The radio processing part 202 transforms the radio signal received at the antenna 201 to a baseband reception signal and outputs the result.

The FFT part 203 processes the reception signal output from the radio processing part 202 by a Fast Fourier Transform to transform the time domain reception signal to a frequency domain reception signal. The demodulating part 204 demodulates the reception signal output from the FFT part 203. The demodulation scheme, for example, is included in the resource allocation information received utilizing the PDCCH. Therefore, the demodulating part 204 performs the demodulation in accordance with the resource allocation information output from the control channel demodulating part 206.

The decoding part 205 decodes the demodulated reception signal by error correction decoding. The decoding scheme and coding rate when performing error correction decoding are based on the resource allocation information output from the control channel demodulating part 206. The decoding part 205 can use error correction decoding to decode the pre-error correction coding user data or RRC control information or other various types of control information.

The control channel demodulating part 206 demodulates the control signal transmitted utilizing the PDCCH or other control channel. The demodulated control information includes, for example, resource allocation information. The control channel demodulating part 206 outputs the resource allocation information to the demodulating part 204 and the decoding part 205. Further, the control channel demodulating part 206 judges if the G-RNTI output from the control information processing part 207 matches the G-RNTI transmitted by the control channel and, when they match, may extract the resource allocation information from the control information which accompanies the G-RNTI. The extracted resource allocation information is output to the demodulating part 204 and the decoding part 205, so the mobile station 3 may demodulate and decode the group TA value addressed to the mobile station 3 or the mobile station identifier of the representative mobile station 3a which was received as an instruction signal. Details will be explained later.

The control information processing part 207 extracts various types of control information from the output of the decoding part 205. For example, the control information processing part 207 extracts the G-RNTI from the demodulated and decoded RRC control information and outputs the extracted G-RNTI to the control channel demodulating part 206. The control information processing part 207, for example, may extract the group TA value from the output of the decoding part 205 and output the group TA value to the transmission timing control part 215. The control information processing part 207 may, for example, extract the mobile station identifier of the representative mobile station 3a received as an instruction signal from the output of the decoding part 205 and output the group TA value to the pilot generating part 217.

Further, the control information processing part 207 outputs the transmission message to the base station 2 determined in the random access routine to the multiplexing part 209. The preamble generating part 218 generates a contention-base random preamble and contention-free random access preamble and inputs these preambles to the multiplexing part 211.

When the mobile station identifier designates this mobile station 3 as the representative mobile station 3a, the pilot generating part 217 may repeatedly generate a monitoring signal constituted by the pilot signal and input it to the multiplexing part 211. For example, the pilot generating part 217 generates a pilot signal at any time before the TA timer of the base station 2 which detects loss of uplink synchronization runs out. For example, the pilot generating part 217 may generate a pilot signal by a period which is shorter than the time period from when the TA timer is reset to when it runs out.

The monitoring signal, which the representative mobile station 3a repeatedly or cyclically transmits, may also be a signal other than the pilot signal. The representative mobile station 3a may also repeatedly or periodically generate dummy user data and use a scheduling request signal for transmitting the dummy user data as the monitoring signal.

The data processing part 208 performs various types of processing such as compression coding on the user data. The processed data is output to the multiplexing part 209. The multiplexing part 209 multiplexes the user data which was output from the data processing part 208, various types of control information, and a transmission message for the random access routine. The control information may also be, for example, RRC control information or MAC-CE (Medium Access Control-Control Element) control information. The multiplexing part 209 outputs the obtained multiplexed signal to the symbol mapping part 210.

The symbol mapping part 210 processes the multiplexed signal by QPSK, 16QAM, or other modulation. The modulation scheme is designated as resource allocation information at the base station 2, so, for example, the symbol mapping part 210 may receive the resource allocation information from the control channel demodulating part 206 and perform the modulation.

The multiplexing part 211 multiplexes the output signal from the symbol mapping part 210, pilot signal, and random access preamble and outputs the result as the multiplexed signal. The pilot signal, for example, contains an preamble pattern which is known at the mobile station 3 and base station 2. The FFT part 212 processes the multiplexed signal which was output from the multiplexing part 211 by a Fast Fourier Transform to thereby transform the time domain multiplexed signal to a frequency domain multiplexed signal.

The frequency mapping part 213 processes the frequency domain multiplexed signal output from the FFT part 212 to map the frequency domain multiplexed signal on a predetermined frequency band. For example, the frequency mapping part 213 maps the multiplexed signal on the frequency band which was allocated to the mobile station 3 and maps "0" on the other frequency bands. Such processing, for example, can be called "subcarrier mapping". The frequency which is allocated to the mobile station 3 is, for example, included in the resource allocation information. The frequency mapping part 213 may obtain the resource allocation information from the control channel demodulating part 206. The frequency mapping part 213 outputs a signal including the mapped multiplexed signal to the IFFT part 214.

The IFFT part 214 processes the output signal from the frequency mapping part 213 by an Inverse Fast Fourier Transform so as to transform the frequency domain output signal to time domain output signal. The transmission timing control part 215 controls the timing of output of the output signal from the IFFT part 214 to the radio processing part 216 to thereby control the transmission timing of the radio signal which is transmitted from the mobile station 3. The transmission timing control part 215 receives the group TA value output from the control information processing part 207 and calculates for example the following formula so as to determine the transmission timing.

$$(N_{TA}+N_{TAoffset})\cdot Ts \quad (1)$$

Formula (1), for example, corresponds to the transmission timing which is illustrated in FIG. 24. The transmission timing control part 215, for example, outputs the output signal of the IFFT part 214 to the radio processing part 216 advanced from the mobile station's own transmission timing by the amount of timing calculated by formula (1). The mobile station's own transmission timing is, for example, contained in the resource allocation information demodulated by the control channel demodulating part 206, so the transmission timing control part 215 may utilize this information to obtain its own transmission timing.

In formula (1), the group TA value corresponds to the "$N_{TA}$" of formula (1). The internal memory of the transmission timing control part 215 holds "$N_{TAoffset}$" and "Ts". The transmission timing control part 215 may suitably read out and process the fixed values.

The radio processing part 216 transforms the output signal which was output from the transmission timing control part 215 to a wireless band radio signal. The radio signal which was output from the radio processing part 216 is, for example, transmitted as a single carrier signal through the antenna 201 to the base station 2.

3.2. Overall Operation

Next, examples of the operations of the communication system 1 or base station 2 and mobile stations 3 will be explained. First, an example of the overall operation will be explained, next examples of operation of the base station 2 and the mobile stations 3 will be respectively explained.

FIG. 7 is a sequence diagram which illustrates an example of the overall operation of the communication system 1. In the operation AA, the mobile stations 3 and the base station 2 respectively execute random access routines. In the operation AB, the base station 2 uses the message which was received by the random access routine or the data or pilot signals which were later received from mobile stations 3 as the basis to measure the TA values of the mobile stations 3. For example, the TA value calculating part 117 measures the TA values. The base station 2 defines the measured TA values as the timing correction amounts $N_{TA}$.

In the operation AC, the base station 2 generates groups from the measured TA values. For example, the group generating part 118 groups together the mobile stations 3 which have TA values within certain ranges. Further, the base station 2 updates the already formed groups in accordance with need. In this example, assume the mobile stations 3a to 3c form a group 4a, while the mobile station 3f is a nonmember mobile station.

In the operation AD, the base station 2 allocates a G-RNTI as a group identifier to the generated group and transmits the allocated G-RNTI to the mobile stations 3. For example, in the example of FIG. 6, the base station 2 allocates the "G-RNTI-1" or other G-RNTI to the group of the identification information "group 1." The base station 2 transmits the allocated G-RNTI, using, for example, the PDSCH radio resources, as the RRC control information to the mobile stations 3.

In the operation AE, the base station 2 selects a representative mobile station for each group. Further, in accordance with need, the base station 2 updates the representative mobile station for a group in which a representative mobile station was selected previously. For example, the designating part 119 selects or updates the representative mobile station. In the present example, the case where the mobile station 3a is selected as the representative mobile station is assumed. In the operation AF, the base station 2 transmits an instruction signal to the representative mobile station 3a. For example, the instruction signal generating part 120 generates an instruction signal, then the instruction signal is stored in a packet which is generated by the packet generating part 103 and transmitted.

In the operation AG, the representative mobile station 3a transmits a monitoring signal. For example, the pilot generating part 217 generates a pilot signal as the monitoring signal. The pilot signal is multiplexed by the multiplexing part 211 with the uplink signal and transmitted to the base station 2. In the operation AH, the base station 2 uses the monitoring signal as the basis to measure the TA value of the representative mobile station 3a. For example, the TA value calculating part 117 measures the TA value. The base station 2 defines the measured TA value as the timing correction amount $N_{TA}$.

In the operation AI, the base station 2 transmits to the mobile stations 3a to 3c to which the G-RNTI was allocated the TA value which was measured as the group TA value by a multicast. When the mobile stations 3 receive the group TA value, they calculate formula (1) to determine the transmission timing and transmit the data etc. at this transmission timing. Due to this, the base station 2 can make the reception timings of the data from the mobile stations 3 match with the frame timings whereby, for example, the difference in reception timings of the data from the different mobile stations 3 becomes within the CP length. Therefore, the base station 2 may prevent offset of reception timings and maintain the quality of reception.

In the operation AJ, the base station 2 generates an individual TA value for the nonmember mobile station 3f and transmits it to the mobile station 3f to thereby correct the control of transmission timing of the nonmember mobile station 3f. When the offset in synchronization of the mobile station 3c which belongs to the group 4a becomes larger than a certain threshold value, the base station 2 generates an individual TA value for this mobile station 3c and transmits the individual TA value to the mobile station 3c so as to correct the control of the transmission timing of the mobile station 3c. For the mobile station 3c in the group 4a, the group TA value is used for control of the transmission timing, but after that sometimes the offset in reception frame timing of the signal from the mobile station 3c for which the transmission timing has been corrected based on the group TA value becomes larger than a threshold. In such a case, the base station 2 corrects the transmission timing individually for the mobile station 3c. When the offset in synchronization continues, the base station 2 either incorporates the mobile station 3c into another group or individually controls the transmission timing as a nonmember mobile station. Details will be explained later.

3.3. Operation of Base Station 2

Next, an example of the operation of the base station 2 will be explained. FIG. 8 is an explanatory view of an example of operation of the base station 2. The base station 2 repeats the loop of the following operations BA to BI. In the operation BA, the base station 2 uses the monitoring signal transmitted from the representative mobile station 3a as the basis to calculate the TA value. For example, the TA value calculating part 117 calculates the TA value. Further, base station 2 calculates the TA value based on a monitoring signal which was transmitted from a mobile station 3 other than the representative mobile station 3a in the period from the operation BA of the previous loop to the operation BA of the current loop.

In the operation BB, the base station 2 generates groups. For example, the group generating part 118 uses the TA values of the mobile stations 3 from the TA value calculating part 117 as the basis to group together the mobile stations 3a to 3c which have TA values in a certain range to form the group 4a. In the operation BC, the base station 2 newly allocates a group identifier for the group members 3a to 3c. In the present embodiment, it allocates the G-RNTI as the group identifier. For example, the radio resource control part 101 uses the information relating to the groups which is output from the group generating part 118 as the basis to newly allocate the same G-RNTI to the mobile stations 3a to 3c which belong to the same group 4a.

In the operation BD, the base station 2 transmits the newly allocated G-RNTI to the mobile stations 3a to 3c. For example, the radio resource control part 101 outputs the allocated G-RNTI as RRC control information to the packet generating part 103. Due to this, the newly allocated G-RNTI is transmitted to the mobile stations 3a to 3c which belong to the same group 4a. If another group 4b is generated, the base station 2 may further newly allocate and transmit another G-RNTI corresponding to the other group 4b.

FIG. 9A is a view which illustrates an example of allocation of radio resources for the G-RNTI. The ordinate indicates the frequency domain, while the abscissa indicates the time domain. The control information is transmitted as a control signal utilizing the PDCCH radio resources. The data is transmitted as a data signal using the PDSCH radio resources. For example, the radio resource control part 101 allocates the G-RNTI to the PDSCH radio resources whereby the G-RNTI is transmitted through the channel of the PDSCH.

Refer to FIG. 8. In the operation BE, the base station 2 designates the representative mobile station 3a. Tor example, the designating part 119 designates the representative mobile station 3a. In the operation BF, the base station 2 uses the monitoring signal received from the representative mobile station 3a as the basis to calculate the group TA value. For example, the TA value calculating part 117 calculates the TA value.

In the operation BG, the base station 2 transmits the group TA value to the mobile stations 3a to 3c by a multicast. For example, the MAC control part 102 receives the TA value of the representative mobile station 3a which was calculated at the TA value calculating part 117 as the group TA value through the group generating part 118 and radio resource control part 101. When a plurality of groups has been generated, the MAC control part 102 calculates the group TA values for the number of groups which have been generated. The radio resource control part 101, for example, when notified from the MAC control part 102 that the group TA value has been calculated, allocates radio resources for the group TA value.

FIG. 9B is a view which illustrates the allocation of radio resources to the group TA value. The radio resource control part 101, for example, identifies the group 4a as the destination of the group TA value and extracts the G-RNTI for this group from the allocated G-RNTIs. Further, the radio resource control part 101 generates control information to accompany the G-RNTI and incorporates the resource allocation information of the group TA value in the control information. The G-RNTI and the control information which accompanies the G-RNTI are one example of the control signal which accompanies transmission of the group TA value.

The radio resource control part 101 sets a search space unique to the group on the PDCCH radio resources and allocates radio resources in the search space to the G-RNTI and the control information which accompanies the G-RNTI. The radio resource control part 101 allocates the group TA value to the PDSCH radio resources. The radio resource control part 101 outputs the extracted G-RNTI and the control information which accompanies the G-RNTI to the multiplexing part 107. Due to this, for example, the group TA value is transmitted to the mobile stations 3 by the radio resources which are illustrated in FIG. 9B.

If focusing on the example of allocation of radio resources of FIG. 9B, the G-RNTI and control information allocated to the PDCCH are addressed to the plurality of mobile stations 3a to 3c which are in the same group 4a and may be shared by a single radio resource (or radio resource block). For example, the G-RNTI and control information may be shared by a single radio resource block.

Further, the PDSCH radio resources to which the group TA value is allocated are also radio resources which are used in common by a plurality of mobile stations 3a to 3c. Accordingly, the radio resource control part 101 may allocate to the group TA value not radio resources which differ for each of the plurality of mobile stations 3a to 3c, but radio resources common for units of groups. Due to this, the base station 2 may transmit the group TA value to the mobile stations 3 in the group by a multicast.

Returning to FIG. 8, in the operation BH, the base station 2 transmits an individual TA value to the nonmember mobile station 3f. Further, when the loss of synchronization of the mobile station 3c of the group 4a becomes greater than a certain threshold value, the base station 2 transmits the individual TA value to the mobile station 3c.

In the operation BH, there are two processing operations, i.e., transmission of an individual TA value to the nonmember mobile station 3f and transmission of an individual TA value to the mobile station 3c which has been individually corrected while belonging to the group 4a. For the nonmember mobile station 3f, the base station 2 uses the C-RNTI (Cell-Radio Network Temporary ID) to transmit the individual TA value. The individual TA value is, for example, the TA value which the TA value calculating part 117 calculates individually for each mobile station 3. For the mobile station 3c which belongs to the group 4a, the MAC control part 102 decides to individually correct the value for the mobile station 3c when for example the offset between the TA value of the mobile station 3c and the group TA value is larger than an individual correction threshold value.

In the operation BI, the MAN control part 102 outputs the TA value of the nonmember mobile station 3f or the TA value of the mobile station 3c as the individual TA value to the packet generating part 103, while the radio resource control part 101 allocates the radio resources so as to transmit the individual TA value.

For example, the radio resource control part 101 allocates radio resources for the individual TA value so that the individual TA value is transmitted by the PDSCH and outputs the individual TA value to the packet generating part 103. In this case, the individual TA value is also, for example, transmitted by utilizing the PDSCH, but the resource allocation information on the radio resources of the individual TA value is included in the control information which accompanies the C-RNTI. For example, the radio resource control part 101 generates this control information and C-RNTI and outputs the control information and C-RNTI to the multiplexing part 107 so as to be transmitted by utilizing the PDCCH. After that, the routine returns to the operation BA whereby the base station 2 repeats the above-mentioned processing.

The base station 2 individually corrects the value of the mobile station 3c which belongs to the group 4a, then deletes the mobile station 3c in which offset of synchronization continues from the allocated group 4a and incorporates it into another group or controls it individually by the C-RNTI.

For example, in the operation BA, the TA value of the mobile station 3c is calculated and, if the difference between TA value of the mobile station 3c and the group TA value is larger than the individual correction threshold value, in the operation BB, the base station 2 deletes the mobile station 3c from the group members. For example, the group generating part 118 deletes the mobile station 3c from the group members if the difference between the TA value of the mobile station 3c and the group TA value is larger than the individual correction threshold value. Further, the group generating part 118 judges if the TA value of the mobile station 3c is included in a certain range with respect to a group TA value of another group 4b and, if included, incorporates the mobile station 3c into the other group 4b.

When the TA value of the mobile station 3c is not included in the range of any group, the group generating part 118 designates the mobile station 3c as a "nonmember mobile station". When, in this way, in the operation BB, the groups are updated, the group generating part 118 outputs information regarding the updated groups and information regarding the nonmember mobile stations to the MAC control part 102.

In the operation BC, the MAC control part 102 uses the updated groups as the basis to allocate the G-RNTI. Due to this, the updated group members are allocated the changed G-RNTI. Note that, the MAC control part 102, for example, outputs the calculated TA value to the multiplexing part 107 so as to individually control the transmission timing for the nonmember mobile station 3f. For example, the radio resource control part 101 generates control information to accompany the C-RNTI and incorporates the resource allocation information of the individual TA value which is allocated to radio resources of the PDCCH in this control information. Due to this, the radio resource control part 101 may utilize the PDCCH radio resources to transmit the individual TA value.

3.4. Operation of Mobile Stations 3

Next, an example of operation of a mobile station 3 will be explained. FIG. 10 is a flowchart which illustrates an example of operation of the mobile station 3. The processing which is illustrated in FIG. 10 is, for example, performed after the mobile station 3 transmits a data signal or pilot signal to the base station 2 or otherwise when transmitting a radio signal with the base station 2.

In the operation CA, the mobile station 3 judges if a G-RNTI has been allocated. For example, the mobile station 3 judges if a G-RNTI has been allocated by determining whether the control information processing part 207 has extracted a G-RNTI from the output of the decoding part 205. In this case, the G-RNTI is, for example, received by utilizing the PDSCH. When the G-RNTI has been allocated (operation CA: Y), the routine proceeds to the operation CB. When no G-RNTI has been allocated (operation CA: N), the routine proceeds to the operation CD.

In the operation CB, the mobile station 3 receives the group TA value addressed by the G-RNTI. For example, the control channel demodulating part 206 receives the G-RNTI through the control channel such as PDCCH and judges if the G-RNTI received through the control channel matches with the G-RNTI received from the control information processing part 207. For example, when judging that they match, the control channel demodulating part 206 extracts from the control information which accompanies the received G-RNTI the resource allocation information of the group TA value and outputs this resource allocation information to the demodulating part 204 and the decoding part 205. Due to this, the mobile station 3 may demodulate and decode the group TA value addressed by the G-RNTI and transmitted through the PDSCH.

In the operation CC, the mobile station 3 uses the received group TA value to control its transmission timing. For example, the control information processing part 207 outputs the demodulated and decoded group TA value to the transmission timing control part 215, then the transmission timing control part 215 calculates formula (1) in accordance with the group TA value. The transmission timing control part 215, for example, outputs the FFT processed data etc. to the radio processing part 216 advanced from its own transmitted frame timing by exactly the calculated value of formula (1).

In the operation CD, the mobile station 3 receives the individual TA value addressed by the C-RNTI. For example, the control channel demodulating part 206, when receiving a C-RNTI addressed to the mobile station 3 itself, extracts from the control information which accompanies the C-RNTI the resource allocation information of the individual TA value. Further, the control channel demodulating part 206 outputs the extracted resource allocation information to the demodulating part 204 and the decoding part 205. Due to this, the individual TA value addressed to the mobile stations 3 is demodulated and decoded.

In the operation CE, the mobile station 3 controls the reception timing by the received individual TA value. For example, the control information processing part 207 outputs the demodulated and decoded individual TA value to the transmission timing control part 215, then the transmission timing control part 215 enters the individual TA value as the timing correction amount $N_{TA}$ of formula (1) and again calculates formula (1) to adjust the transmission timing. Due to this, the transmission timing of the larger synchronization offset mobile station 3c or nonmember mobile station 3f may be controlled and the reception timing at the base station 2 can be synchronized with the frame timing. After that, the routine again proceeds to the operation CA whereby the mobile station 3 may repeat the above operation.

When the offset of synchronization continues in the mobile station 3c, an updated G-RNTI is received from the base station 2 or the C-RNTI is used for individual control. After receiving the updated G-RNTI, the mobile station 3 again performs the operation CA.

When the C-RNTI is used for individual control, the operation CA is again proceeded to. The judgment at the operation CA becomes "N" and the routine proceeds to the operation CD. In the operation CD, the mobile station 3 receives the individual TA value addressed by the C-RNTI, but in this case, the control information which accompanies the C-RNTI becomes the resource allocation information on the PDCCH. For example, the control channel demodulating part 206 of the mobile station 3 demodulates the individual TA value from the PDCCH in accordance with this resource allocation information and outputs it through the control information processing part 207 to the transmission timing control part 215. Due to this, the mobile station 3 is individually controlled in transmission timing by the individual TA value.

3.5. Advantageous Effects

In the third embodiment, the monitoring signal which the representative mobile station 3 transmits is shared for control of the transmission timings for the plurality of mobile stations 3 which belong to the same group. For this reason, compared to when a group of mobile stations 3 individually transmit monitoring signals, the overhead of the control signals in the uplink is reduced. Further, the power consumptions of the mobile stations 3 other than the representative mobile station 3 are reduced.

Further, in the communication system 1 of the third embodiment, a plurality of mobile stations 3 which belong to the same group can be controlled in transmission timings all together. FIG. 11 is a view which illustrates an example of the situation where the transmission timings are controlled all together. When a plurality of mobile stations 3 are disposed on the same train, the speeds of movement will be the same, so the TA values which are measured by the base station 2 will respectively be in a certain range. The base station 2 groups together such a plurality of mobile stations 3 and uses the same TA value (or a group TA value) to control the transmission timings all together.

Further, when each mobile station 3 is individually controlled in transmission timing control, as illustrated in FIG. 8B by the broken line, the PDCCH which is individually allocated to each mobile station 3 is utilized to transmit a TA command. As a result, a plurality of radio resources (or radio resource blocks) at the PDCCH are utilized.

However, in the third embodiment, the base station 2 groups together a plurality of mobile stations 3, so the unit of transmission of the group TA values is the group unit. On the PDCCH, one radio resource is used for a group unit. For this reason, compared with when individually controlling the transmission timings, the overhead of the control signals in the downlink can be reduced.

3.6. Modification

Whe values of the group TA value and the individual TA value transmitted from the base station 2 to the mobile stations 3 may be the values of the TA values themselves or may be the differences from the previous transmitted TA values. By the differences being transmitted, the overhead of the control signals can be reduced compared with when transmitting the TA values themselves. In the case of a group TA value, for example, the MAC control part 102 holds the previously calculated group TA value and further calculates the difference between the TA value of the representative mobile station 3a received from the TA value calculating part 117 and the held group TA value. Further, the MAC control part 102 outputs this difference as the group TA value to the packet generating part 103. The MAC control part 102, for example, may store the previously calculated value of the group TA value itself in an internal memory. The MAC control part 102 also similarly calculates the difference for the individual TA value and output it to the packet generating part 103.
On the other hand, in a mobile station 3, the control information processing part 207 may hold the previously calculated TA value itself and adds or subtracts the received difference for the previously calculated TA value so as to obtain the current TA value and may output this to the transmission timing control part 215. In the following embodiments as well, the base station 2 may transmit the difference to the mobile stations 3 rather than the TA value itself.

4. Fourth Embodiment

Next, another embodiment of the communication system 1 will be explained. In the third embodiment, for example as illustrated in FIG. 5, the TA values are used as the basis to group together the mobile stations 3. A TA value is a value at a certain instant of time. For example, if mobile stations 3 are disposed in a bus and on a train at equal distances from the base station 2 and moving by equal speeds, the TA values of these mobile stations 3 will become equal. In such a case, the plurality of mobile stations 3 in the bus and the plurality of mobile stations 3 on the train are assigned to the same group.
In the fourth embodiment, a plurality of mobile stations 3 with amounts of fluctuation over time ΔTA of the TA values in a certain time period which are within a certain range are grouped together, so it is possible control the transmission timings more finely than in the second embodiment and therefore possible to prevent offset in reception timings at the base station 2.
FIG. 12 is a graph which illustrates an example of the distribution of the amount of fluctuation over time ΔTA of the TA values. The ordinate indicates the number of mobile stations, while the abscissa indicates the amount of fluctuation over time ΔTA. For example, in a bus or on a train, the amount of change of the speed of movement greatly differs along with the elapse of time. The amounts of error in the reception timings of the mobile stations 3 in the bus and on the train at the base station 2 also differ along with the elapse of time. Therefore, for example, as illustrated in FIG. 12, the amounts of fluctuation over time ΔTA of the plurality of mobile stations 3 in the bus fall within one range, while the amounts of fluctuation over time ΔTA of the plurality of mobile stations 3 on the train fall within another range.
The amount of fluctuation over time ΔTA, for example, may mean the amount of change of the error in reception timing at the base station 2. In the example of FIG. 11, a plurality of mobile stations 3 in a bus are grouped together as "group 1", while a plurality of mobile stations 3 on a train are grouped together as "group 2". The transmission timings are controlled respectively all together at the two groups. Due to this, for example, it is possible to separate mobile stations 3 which are close in TA values at a certain timing, and which move by different speeds of movement into different groups and thereby avoid the issue of the same timing correction amount being given to mobile stations 3 where the offsets in TA values become greater along with the elapse of time.
In the fourth embodiment, the TA value calculating part 117 which is illustrated in FIG. 4 may calculate the TA values for a certain constant time period so as to calculate the amount of fluctuation over time ΔTA of the TA values and the group generating part 118 may use the amount of fluctuation over time ΔTA to generate the groups. Further, in the operation AC of FIG. 7, the base station 2 uses the amount of fluctuation over time ΔTA of the TA values as the basis to generate and update groups.
In the operation BA of FIG. 8, the TA value calculating part 117 respectively calculates the TA values at a plurality of times a certain time period apart. For example, the mobile station 3 transmits a reference signal for each radio frame, so the TA value calculating part 117 measures TA values of a plurality of time periods separated by 1 radio frame intervals.
The TA value calculating part 117 calculates the difference of two TA values to thereby calculate the amount of fluctuation over time ΔTA of the TA values. For example, the TA value calculating part 117 calculates the difference between the measured TA value and the TA value after the elapse of one radio frame so as to obtain the amount of fluctuation over time ΔTA. For example, the TA value calculating part 117 may use not the TA values after the elapse of one radio frame, but for example the TA values after the elapse of the time of several frames. The TA value calculating part 117 may use one or more symbol timings, one or more slot timings, or the TA value after the elapse of a certain time period which is obtained by measuring a certain time period from the first measured TA value.

In the operation BB, the group generating part 118 generates groups from the amount of fluctuation over time ΔTA of the TA values. For example, the TA value calculating part 117 outputs the calculated amount of fluctuation over time ΔTA to the group generating part 118, then the group generating part 118 groups together pluralities of mobile stations 3 with amounts of fluctuation over time ΔTA within certain ranges to form the groups.

In the fourth embodiment, the monitoring signal which the representative mobile station 3 transmits is shared for control of the transmission timings for the plurality of mobile stations 3 which belong to the same group. For this reason, compared to when a group of mobile stations 3 individually transmit monitoring signals, the overhead of the control signals in the uplink is reduced. Further, the power consumptions of the mobile stations 3 other than the representative mobile station 3 are reduced.

Further, it is possible to control the transmission timings for a plurality of mobile stations 3 which belong to the same group all together. Further, the group TA value may be transmitted by a single radio resource block for a group unit in the PDCCH. Therefore, compared to when transmitting the TA value individually for each mobile station 3, consumption of radio resources at the PDCCH can be reduced.

5. Fifth Embodiment

Next, another embodiment of the communication system 1 will be explained. In the third embodiment and the fourth embodiment, the group TA values were transmitted by the G-RNTI by multicast. In the fifth embodiment, the group TA value is transmitted as report information.

FIG. 13 is a view which illustrates part of an example of a configuration of report information. The report information links a group ID and a group TA value as a set and includes the same number of sets as the groups which the base station 2 generates. The group ID is one example of a group identifier.

The report information is, for example, transmitted from the base station 2 in units of SIBs (System Information Blocks) by a period of 80 ms or more. FIG. 14A is a view which illustrates an example of allocation of radio resources for the report information. In the example of FIG. 14A, an SIB is allocated to the PDSCH radio resources, while an SI-RNTI (System Information RNTI) is allocated to the PDCCH radio resources. A mobile station 3, when obtaining an SI-RNTI which matches with a preallocated SI-RNTI from the PDCCH radio resources, extracts the resource allocation information of the SIB which is contained in the control information which accompanies the SI-RNTI.

A mobile station 3 may use the extracted resource allocation information as the basis to receive the report information included in the SIB and obtain the group TA value from the report information. The SI-RNTI which is allocated to a mobile station 3 is, for example, received by transmission from the base station 2 in advance and is held in an internal memory of the control channel demodulating part 206. The SI-RNTI is, for example, an identifier for a mobile station 3 to receive report information transmitted by an SIB.

5.1. Example of Overall Operation

Referring to FIG. 7, an example of the overall operation of the communication system 1 will be explained. The operations AA to AC are similar to the operations AA to AC in the third embodiment. In the operation AD, the base station 2 allocates a group ID to the group and transmits the group ID to the mobile stations 3 which belong to that group. For example, the group ID is transmitted as MAC-CE (Media Access Control-Control Element) control information. In this case, the group ID is, for example, as illustrated in FIG. 14B, transmitted by using the PDSCH radio resources.

The operations AE to AH are similar to the operations AE to AH in the third embodiment. In the operation AI, the base station 2 transmits the group TA value as the report information. The base station 2, for example, as illustrated in FIG. 14A, allocates SI-RNTI to the PDCCH radio resources and allocates the group ID and cluster TA value to the PDSCH radio resources. The mobile stations 3a to 3c which receive the report information may receive the group TA value of the group 4a and control the transmission timings in accordance with the group TA value. The operation AJ is similar to the operation AJ in the third embodiment.

5.2. Operation of Base Station 2

Referring to FIG. 8, the operation of the base station 2 will be explained. The operations BA and BB are similar to the operations BA and BB in the third embodiment. In the operation BC, the base station 2 newly allocates the group ID to the group members 3a to 3c. For example, the MAC control part 102 receives information relating to the groups from the group generating part 118 and allocates a group ID to the mobile stations 3a to 3c which belong to the same group 4a.

In the operation BD, the base station 2 transmits the allocated group ID to the mobile stations 3a to 3c which belong to the group 4. For example, the MAC control part 102 outputs the group ID as MAC-CE control information to the packet generating part 103. The radio resource control part 101, for example, when receiving notification from the MAC control part 102 regarding allocation of the group ID, allocates the group ID to the PDSCH radio resources. The operations BE and BF are similar to the operations BE and BF in the third embodiment.

In the operation BG, the base station 2 transmits the group ID and the group TA value as report information. For example, the MAC control part 102 outputs the group TA value and the group ID which was generated at S62 as report information to the packet generating part 103. When for example a plurality of groups are formed, the MAC control part 102 outputs numbers of group IDs and group TA values for the generated groups. When for example notified of the calculation of a group TA value from the MAC control part 102, the radio resource control part 101 allocates radio resources for the group TA value.

The radio resource control part 101 generates control information to accompany the SI-RNTI and incorporates the resource allocation information of the report information in the control information. The radio resource control part 101, as illustrated in FIG. 14A, allocates the SI-RNTI and the control information which accompanies the SI-RNTI to the PDCCH radio resources. Further, the radio resource control part 101 allocates report information constituted by the transmitted group ID and the group TA value to the radio resources of the PDSCH. The radio resource control part 101 outputs the SI-RNTI and control information which accompanies the SI-RNTI to the multiplexing part 107. Due to this, for example, the report information is transmitted to the mobile station 3 by a broadcast. The operations BH and BI are similar to the operations BH and BI in the third embodiment.

5.3. Operation of Mobile Stations 3

FIG. 15 is an explanatory view of an example of operation of a mobile station 3. In the operation DA, the mobile station 3 judges if the group ID has been allocated. Whether or not a group ID has been allocated may, for example, be judged by whether the control information processing part 207 has received (or input) the group ID transmitted as the MAC-CE control information. When the group ID has been allocated (operation DA: Y), the routine proceeds to the operation DB. When the group ID is not allocated (operation DA: N), the routine proceeds to the operation DD.

In the operation DB, the mobile station 3 receives the group TA value notified by the report information. For example, the control channel demodulating part 206 receives the control information transmitted by the PDCCH, extracts the SI-RNTI, and, when the extracted SI-RNTI matching the SI-RNTI allocated to the mobile station 3 itself in advance, extracts the control information which accompanies the SI-RNTI. The control channel demodulating part 206 reads out the resource allocation information of the report information which is contained in the control information which accompanies the SI-RNTI and outputs the resource allocation information to the demodulating part 204 and decoding part 205.

Due to this, for example, the mobile station 3 can extract the report information which was allocated to the PDSCH radio resources. Further, the control information processing part 207, for example, reads out the group ID and the group TA value from the report information, finds the group ID which matches the group ID which was assigned to the mobile station 3 from the report information, and extracts the group TZA value which corresponds to this group ID. The extracted group TA value is, for example, output to the transmission timing control part 215 where transmission timing control is performed. The operations DC to DE are similar to the operations CC to CE in FIG. 10.

5.4. Advantageous Effects

In the fifth embodiment as well, the monitoring signal which the representative mobile station 3 transmits is shared for control of the transmission timings for the plurality of mobile stations 3 which belong to the same group. For this reason, compared to when a group of mobile stations 3 individually transmit monitoring signals, the overhead of the control signals in the uplink is reduced. Further, the power consumptions of the mobile stations 3 other than the representative mobile station 3 are reduced.

Further, it is possible to control the transmission timings for a plurality of mobile stations 3 which belong to the same group all together. Further, the group TA value may be transmitted by a single radio resource block for a group unit in the PDCCH. Therefore, compared to when transmitting the TA value individually for each mobile station 3, consumption of radio resources at the PDCCH can be reduced.

6. Sixth Embodiment

Next, another embodiment of the communication system 1 will be explained. In a sixth embodiment, the group TA value is transmitted as a paging channel. The paging channel, for example, is a channel which is transmitted when an incoming call addressed to a mobile station 3 occurs or other event occurs at a mobile station 3. Further, the paging channel is also a channel which is reported, for example, from the base station 2 by a broadcast.

The sixth embodiment utilizes part of the report information which is transmitted by the paging channel so as to transmit the group TA value. The transmission of report information by the paging channel is performed more frequently than transmission by the SIB, so in the sixth embodiment, the number of times that transmission timings are controlled can be increased over the fifth embodiment.

FIG. 16A and FIG. 16B are views which respectively illustrate allocation of radio resources to report information comprised of the group ID and paging channel. As illustrated in FIG. 16A, the allocated group ID is transmitted as the MAC-CE control information utilizing the PDSCH radio resources.

As illustrated in FIG. 16B, the P-RNTI (Paging-RNTI) and the control information which accompanies the P-RNTI are allocated to the PDCCH radio resources, while report information by the paging channel is allocated to the PDSCH radio resources. The P-RNTI is, for example, an identifier of report information which is transmitted by the paging channel and is deemed to be allocated in advance to and held at the mobile stations 3. Further, when the held P-RNTI and the received P-RNTI match, the mobile stations 3 extract resource allocation information from the control information which accompanies the P-RNTI.

The mobile station 3 may receive from the extracted resource allocation information the report information by the paging channel which was allocated to the radio resources of the PDSCH. The report information, in the same way as the example of FIG. 13, includes a group ID and group TA value. A plurality of sets are included when a plurality of groups are formed.

## 6.1. Example of Overall Operation

Referring to FIG. 7, an example of the overall operation of the communication system 1 will be explained. The operations AA to AC are similar to the operations AA to AC in the third embodiment. The operation AD is similar to the operation AD in the fifth embodiment. The operations AE to AH are similar to the operations AE to AH in the third embodiment.

In the operation AI, the base station 2 transmits the group TA value and allocated group ID through the paging channel as report information by a broadcast. For example, the radio resource control part 101, when receiving notification from the MAC control part 102 of the formation of a group TA value, extracts a destination of the group TA value from the pretransmitted P-RNTI. Further, the radio resource control part 101 respectively allocates P-RNTI to the PDCCH radio resources and the group ID and the group TA value to the PDSCH radio resources.

Furthermore, the radio resource control part 101, for example, generates control information to accompany P-RNTI and includes resource allocation information of the group TA value in the control information. The radio resource control part 101 respectively outputs the P-RNTI and control information to the multiplexing part 107 and the group ID and group TA value to the packet generating part 103. Due to this, for example, radio resources are allocated as illustrated in FIG. 16B and a group ID and group TA value are transmitted to the mobile stations 3. The operation AJ is similar to the operation AJ in the third embodiment.

## 6.2. Operation of Base Station 2

Referring to FIG. 8, the operation of the base station 2 will be explained. The operations BA and BB are similar to the operations BA and BB in the third embodiment. The operations BC and BD are similar to the operations BC and BD in the fifth embodiment. The operations BE and BF are similar to the operations BE and BF in the third embodiment.

In the operation BG, the base station 2 transmits the group ID and the group TA value by the paging channel as report information. For example, the MAC control part 102 outputs the group TA value and the group ID which is formed at S62 as report information to the packet generating part 103. The radio resource control part 101, when notified from the MAC control part 102 of the calculation of the group TA value, allocates radio resources to the group TA value.

The radio resource control part 101 generates control information to accompany the P-RNTI and incorporates the resource allocation information of the report information in this control information. The radio resource control part 101 allocates the P-RNTI and the control information which accompanies the P-RNTI to the PDCCH radio resources. Further, the radio resource control part 101 allocates the group ID and group TA value which are transmitted as report information to the PDSCH radio resources. The radio resource control part 101 outputs the control information which accompanies the P-RNTI and the P-RNTI to the multiplexing part 107. Due to this, for example, report information is transmitted to the mobile station 3 by a broadcast. The operations BH and BI are similar to the operations BH and BI in the third embodiment.

## 6.3. Operation of Mobile Stations 3

Referring to FIG. 15, the operation of the base station 2 will be explained. The operation DA is similar to the operation DA in the fifth embodiment. In the operation DB, the mobile station 3 receives the group TA value and group ID which were transmitted as report information by the paging channel.

For example, if the control channel demodulating part 206 receives a P-RNTI, when the received P-RNTI matching the held P-RNTI recognizes that the P-RNTI is addressed to itself and extracts the control information which accompanies the P-RNTI. Further, the control channel demodulating part 206 extracts from the control information the allocation information of the report information reported through the paging channel and outputs the report information to the demodulating part 204 and decoding part 205.

The demodulating part 204 and decoding part 205 demodulate and decode the report information which was transmitted by the paging channel and output the result as report information to the control information processing part 207. For example, the control information processing part 207 extracts the group ID which matches the group ID allocated to the mobile stations 3 from the report information and reads out the group TA value which corresponds to this group ID from the report information. Further, the group TA value is output to the transmission timing control part 215 whereby the transmission timing is controlled. The operations DC to DE are similar to the operations CC to CE of FIG. 10.

6.4. Advantageous Effects

In the sixth embodiment as well, the monitoring signal which the representative mobile station 3 transmits is shared for control of the transmission timings for the plurality of mobile stations 3 which belong to the same group. For this reason, compared to when a group of mobile stations 3 individually transmit monitoring signals, the overhead of the control signals in the uplink is reduced. Further, the power consumptions of the mobile stations 3 other than the representative mobile station 3 are reduced.

Further, it is possible to control the transmission timings for a plurality of mobile stations 3 which belong to the same group all together. Further, the group TA value can be transmitted by a single radio resource block for a group unit in the PDCCH. Therefore, compared to when transmitting the TA value individually for each mobile station 3, consumption of radio resources at the PDCCH can be reduced.

Further, by using the paging channel, the transmission timings can be controlled by a higher frequency than even the fifth embodiment.

7. Seventh Embodiment

Next, another embodiment of the communication system 1 will be explained. In the seventh embodiment, the C-RNTI of the representative mobile station 3a is notified to the mobile stations 3a to 3c of the group 4a. The mobile stations 3b and 3c of the group 4a other than the representative mobile station 3a use the C-RNTI of the representative mobile station 3a to receive the TA value which the base station 2 transmits to the representative mobile station 3a. The mobile stations 3b and 3c control the transmission timings by the TA value of the representative mobile station 3a.

FIG. 17A and FIG. 17B are views illustrating the allocation of radio resources to the C-RNTI and the TA values. As illustrated in FIG. 17A, the C-RNTI of the representative mobile station 3a is transmitted as the RRC control information by utilizing the radio resources of the PDSCH.

As illustrated in FIG. 17B, the C-RNTI and control information which accompanies the C-RNTI are allocated to the radio resources of the PDCCH. Further, the TA value of the representative mobile station 3a is transmitted as MAC-CE control information by utilizing the radio resources of the PDSCH. The representative mobile station 3a extracts the resource allocation information of the TA value from the control information which accompanies the C-RNTI when the C-RNTI which is allocated to the representative mobile station 3a and the received C-RNTI match. The mobile stations 3b and 3c other than the representative mobile station 3a extract the resource allocation information of the TA value from the control information which accompanies the C-RNTI when the C-RNTI of the representative mobile station 3a which was received as RRC control information and the C-RNTI which was received by the PDCCH radio resources match. The mobile station 3 may receive the TA value which was allocated to the PDSCH radio resources from the extracted resource allocation information.

7.1. Example of Overall Operation

FIG. 18 is a sequence diagram which illustrates an example of the overall operation of the communication system 1. The operations EA to ED are similar to the operations AA to AC and AE of FIG. 7.

In the operation EE, the base station 2 transmits the C-RNTI of the representative mobile station 3a as the identifier of the representative mobile station 3a to the mobile stations 3a to 3c. The base station 2 transmits the allocated C-RNTI using, for example, the PDSCH radio resources as RRC control information to the mobile stations 3. The mobile station 3a which receives the C-RNTI allocated to the mobile station 3a itself judges that the mobile station 3a is itself the representative mobile station 3a. For example, the control information processing part 207 of the mobile station 3a judges that the mobile station 3ais itself the representative mobile station 3a when receiving the C-RNTI allocated to the mobile station 3a itself.

In the operation EF, the representative mobile station 3a transmits a monitoring signal. For example, the control information processing part 207 repeatedly makes the pilot generating part 217 generate a pilot signal as the monitoring signal. For example, the control information processing part 207 makes the pilot generating part 217 generate a pilot signal at any time period before the TA timer of the base station 2 which detects loss of uplink synchronization runs out. The control information processing part 207 may, for example, make the pilot generating part 217 generate a pilot signal by a period shorter than the time period from when the TA timer is reset to when it runs out. The pilot signal is multiplexed by the multiplexing part 211 with the uplink signal and transmitted to the base station 2. In the operation EG, the base station 2 uses the monitoring signal as the basis to measure the TA value of the representative mobile station 3a.

In the operation EH, the base station 2 transmits the TA value to the representative mobile station 3a. The mobile stations 3a to 3c receive the TA value addressed to the C-RNTI of the representative mobile station 3a. The representative mobile station 3a extracts the control information which accompanies its own C-RNTI from the PDCCH and uses the resource allocation information which is contained in the control information as the basis to receive the TA value which is allocated to the PDSCH radio resources. The mobile stations 3b and 3c extract the control information which accompanies the C-RNTI of the representative mobile station 3a received as the RRC control information from the PDCCH and use the resource allocation information which is contained in the control information as the basis to receive the TA value. The operation EI is similar to the operation AJ of FIG. 7. 7.2. Operation of Base Station 2

FIG. 19 is an explanatory view of an example of operation of the base station 2. The operations FA to FD are similar to the operations BA to BC and BE of FIG. 8. In the operation FE, the base station 2 transmits as the identifier of the representative mobile station 3a the C-RNTI of the representative mobile station 3a to the mobile stations 3a to 3c. For example, the radio resource control part 101 outputs the C-RNTI of the representative mobile station 3a as the RRC control information to the packet generating part 103. Due to this, the C-RNTI is transmitted to the mobile stations 3a to 3c which belong to the same group 4a.

In the operation FF, the base station 2 transmits the TA value of the the representative mobile station 3a. For example, the MAC control part 102 receives the TA value of the representative mobile station 3a which was calculated at the TA value calculating part 117 through the group generating part 118 and the radio resource control part 101. Note that, the radio resource control part 101, for example, allocates radio resources for the TA value when notified from the MAC control part 102 that the TA value has been calculated.

The radio resource control part 101, for example, generates control information to accompany the C-RNTI and incorporates the resource allocation information of the TA value in this control information. The radio resource control part 101 sets a search space unique to the mobile stations on the PDCCH radio resources and allocates the radio resources in this search space to the C-RNTI and the control information which accompanies the C-RNTI. The radio resource control part 101 allocates the TA value to the PDSCH radio resources. The radio resource control part 101 outputs the C-RNTI and the control information which accompanies the C-RNTI to the multiplexing part 107. The operations FG and FH are similar to the operations BH and BI of FIG. 8.

7.3. Operation of Mobile Stations 3

FIG. 20 is an explanatory view of an example of operation of a mobile station 3. In the operation GA, the mobile station 3 judges if the mobile station 3 has received the C-RNTI of the representative mobile station 3a as RRC control information, for example, by determining whether the control information processing part 207extracts the C-RNTI of the representative mobile station 3a from the output of the decoding part 205. When C-RNTI has been received (operation GA: Y), the routine proceeds to the operation GB. When no C-RNTI is allocated (operation GA: N), the routine proceeds to the operation GD.

In the operation GB, the mobile station 3 receives the group TA value addressed to the C-RNTI. The control channel demodulating part 206 of the representative mobile station 3a judges if the C-RNTI which was received through the PDCCH or other control channel matches its own C-RNTI. When judging they match, for example, the control channel demodulating part 206 extracts the resource allocation information of the TA value from the control information which accompanies the received C-RNTI and outputs this resource allocation information to the demodulating part 204 and the decoding part 205. The representative mobile station 3a can demodulate and decode the TA value which was addressed to the C-RNTI and transmitted by the PDSCH.

The control channel demodulating parts 206 of the mobile stations 3b and 2c other than the representative mobile station 3a receive the C-RNTI which was received by the PDCCH or other control channel and judge if the received C-RNTI matches the C-RNTI of the representative mobile station 3a received from the control information processing part 207. When judging that they match, for example, the control channel demodulating part 206 extracts from the received control information which accompanies the C-RNTI the resource allocation information of the TA value of the representative mobile station 3a and outputs this resource allocation information to the demodulating part 204 and the decoding part 205. The mobile stations 3b and 3c are addressed to the C-RNTI and may demodulate and decode the TA value which is transmitted through the PDSCH. In the operation GC, the mobile station 3 controls the transmission timing by the received TA value. The operations GD and GE are similar to the operations CD and CE of FIG. 10.

7.4. Advantageous Effects

In the seventh embodiment as well, the monitoring signal which the representative mobile station 3 transmits is shared for control of the transmission timings for the plurality of mobile stations 3 which belong to the same group. For this reason, compared to when a group of mobile stations 3 individually transmit monitoring signals, the overhead of the control signals in the uplink is reduced. Further, the power consumptions of the mobile stations 3 other than the representative mobile station 3 are reduced.

Further, it is possible to control the transmission timings for a plurality of mobile stations 3 which belong to the same group all together. Further, the group TA value may be transmitted by a single radio resource block for a group unit in the PDCCH. Therefore, compared to when transmitting the TA value individually for each mobile station 3, consumption of radio resources at the PDCCH can be reduced.

8. Hardware Configuration

Finally, one example of the hardware configuration for realizing the above base station 2 and mobile stations 3 will be explained. FIG. 21 is an explanatory view of one example of the hardware configuration of the base station 2. The base station 2 is provided with a CPU (central processing unit) 150, a memory 151, an LSI (large scale integrated circuit) 152, radio communication circuits 153 and 154, a transmission antenna 110, and a reception antenna 111. The memory 151 may include devices for storing computer programs or data such as a nonvolatile memory, read only memory (ROM), random access memory (RAM), etc. The LSI (large scale integrated circuit) 152 may contain an FPGA (field-programming gate array), ASIC (application specific integrated circuit), DSP (digital signal processor), etc. The radio communication circuit 153 may contain a digital-analog conversion circuit, frequency conversion circuit, etc. The radio communication circuit 154 may contain an analog-digital conversion circuit, frequency conversion circuit, etc.

The above operations of the radio processing part 109 and radio processing part 112 of the base station 2 which are illustrated in FIG. 4 are, for example, performed by the radio communication circuits 153 and 154. The above operations of the radio resource control part 101, MAC control part 102, packet generating part 103, MAC scheduling part 104, coding part 105, modulating part 106, multiplexing part 107, and IFFT part 108 are performed by the CPU 150 and LSI 152 in cooperation. The above operations of the FFT part 113, demodulating part 114, decoding part 115, RLC part 116, TA value calculating part 117, group generating part 118, designating part 119, and instruction signal generating part 120 are performed by the CPU 150 and LSI 152 in cooperation.

FIG. 22 is an explanatory view of one example of the hardware configuration of a mobile station 3. The mobile station 3 is provided with a CPU 250, memory 251, LSI 252, radio communication circuits 253 and 254, and an antenna 201. The memory 151 may include a device for storing computer programs and data such as a nonvolatile memory or read only memory or random access memory. The LSI 152 may contain an FPGA, ASIC, DSP, etc. The radio communication circuit 253 may include an analog-digital conversion circuit, frequency conversion circuit, etc. The radio communication circuit 254 may include a digital-analog conversion circuit, frequency conversion circuit, etc.

The above operations of the radio processing part 202 and radio processing part 216 of FIG. 4 are, for example, performed by the radio communication circuits 153 and 154. The operations of the FFT part 203, demodulating part 204, decoding part 205, control channel demodulating part 206, control information processing part 207, data processing part 208, multiplexing part 209, and symbol mapping part 210 are performed by the CPU 250 and LSI 252 in cooperation. The operations of the multiplexing part 211, FFT part 212, frequency mapping part 213, IFFT part 214, transmission timing control part 215, pilot generating part 217, and preamble generating part 218 are performed by the CPU 250 and LSI 252 in cooperation.

The hardware configurations which are illustrated in FIG. 21 and FIG. 22 are only examples for explaining the embodiments. So long as performing the operations which are described above, any hardware configurations may be employed for the base station 2 and the mobile stations 3 which are described in this Description.

Further, the views of the functional configurations of FIG. 2 to FIG. 5 primarily illustrate configurations relating to the functions of the base station 2 and the mobile stations 3 which are explained in this Description. The base station 2 and the mobile stations 3 may include components other than the illustrated components.

The series of operations which are explained referring to FIG. 7, FIG. 8, FIG. 10, FIG. 15, FIG. 18 to FIG. 20 may be interpreted as a method including a plurality of routines. In this case, "operation" may be read as "step".

All examples and conditional language recited hereinafter are intended for pedagogical purposes to aid the reader in understanding the principles of the invention and the concepts contributed by the inventor to furthering the art and are to be construed as being without limitation to such specifically recited examples and conditions. Nor does the organization of such examples in the specification relate to a showing of the superiority and inferiority of the invention. Although the embodiments of the present inventions have been described in detail, it should be understood that various changes, substitutions, and alterations could be made hereto without departing from the spirit and scope of the invention.

Reference Signs List

1 communication system
2 base station device
3a to 3f mobile station device
10, 118 group generating part
12 correction amount calculating part
14, 119 designating part
15, 120 instruction signal generating part
20 monitoring signal transmitting part
22, 215 transmission timing control part
117 TA value calculating part
217 pilot generating part

## Claims

**1.** A base station device comprising:

a group generating part configured to group together mobile station devices;
a correction amount calculating part configured to use a reception timing of a monitoring signal transmitted from a first mobile station device in a group generated by the group generating part as the basis to calculate a timing correction amount of uplink transmission timing; and
a correction amount transmitting part configured to transmit a timing correction amount calculated based on the reception timing of the monitoring signal transmitted from the first mobile station device as a correction amount of uplink transmission timing in a second mobile station device different from the first mobile station device in the group.

**2.** The base station device according to claim 1 further comprising:

a designating part configured to designate any mobile station device in the group as a first mobile station device; and
an instruction signal transmitting part configured to transmit an instruction signal which makes first mobile station device transmit the monitoring signal.

**3.** The base station device according to claim 1 or 2, comprising:

a group identifier transmitting part configured to transmit a group identifier identifying the group to the mobile station devices belonging to the group,
wherein the correction amount transmitting part designates a destination of the timing correction amount calculated based on the reception timing of the monitoring signal transmitted from the first mobile station device by the group identifier.

**4.** The base station device according to claim 1 or 2, comprising:

a mobile station identifier transmitting part configured to transmit a mobile station identifier identifying the first mobile station device to the mobile station devices belonging to the group,
wherein the correction amount transmitting part designates a destination of the timing correction amount calculated based on the reception timing of the monitoring signal transmitted from the first mobile station device by the mobile station identifier.

**5.** The base station device according to claim 2 wherein the designating part switches the mobile station device which is designated as the first mobile station device among the mobile station devices which belong to the group on a time basis.

**6.** The base station device according to claim 2, wherein the designating part designates the mobile station device which has transmitted an uplink scheduling request as the first mobile station device.

**7.** The base station device according to any one of claims 1 to 6, further comprising:

a resource control part configured to allocate radio resources of a search space allocated uniquely to the group to a control signal accompanying transmission of the timing correction amount calculated based on the reception timing of the monitoring signal transmitted from the first mobile station device.

**8.** The base station device according to any one of claims 1 to 7, wherein the group generating part groups together mobile station devices in accordance with a timing correction amount of uplink transmission timing calculated for each mobile station device.

**9.** A mobile station device comprising:

a correction amount receiving part configured to receive a timing correction amount calculated based on a reception timing at which a base station device received a monitoring signal transmitted from a second mobile station device different from that mobile station device; and
a transmission timing control part configured to use the received timing correction amount as the basis to control an uplink transmission timing.

**10.** The mobile station device according to claim 9, further comprising:

an instruction signal receiving part configured to receive an instruction signal which makes the mobile station device transmit the monitoring signal; and
a monitoring signal transmitting part configured to repeatedly transmit the monitoring signal in response to the instruction signal when receiving the instruction signal.

**11.** The mobile station device according to claim 9 or 10, comprising:

a group identifier receiving part configured to receive a group identifier identifying a the group of mobile station devices from the base station device,
wherein the correction amount receiving part receives the timing correction amount designating the group identifier as its address.

**12.** The mobile station device according to claim 9 or 10, comprising:

a mobile station identifier receiving part configured to receive a mobile station identifier identifying a second mobile station device from the base station device,
wherein the correction amount receiving part receives the timing correction amount designating the mobile station identifier as a destination.

**13.** The mobile station device according to claim 10, wherein the monitoring signal transmitting part repeatedly transmits an uplink reference signal.

**14.** A communication system including a mobile station device and a base station device, the communication system comprising:

a group generating part configured to group together mobile station devices;
a correction amount calculating part configured to use a reception timing at which the base station device receives a monitoring signal transmitted from a first mobile station device in a group generated by the group generating part as the basis to calculate a timing correction amount of uplink transmission timing; and
a correction amount transmitting part configured to transmit a timing correction amount calculated based on the reception timing of the monitoring signal transmitted from the first mobile station device as a correction amount of uplink transmission timing in a second mobile station device different from the first mobile station device in the group.

**15.** A communication method comprising:

grouping together mobile station devices;
using a reception timing at which a base station device receives a monitoring signal transmitted from a first mobile station device in a group of mobile station devices as the basis to calculate a timing correction amount of uplink transmission timing; and
transmitting a timing correction amount calculated based on the reception timing of the monitoring signal transmitted from the first mobile station device as a correction amount of uplink transmission timing in a second mobile station device different from the first mobile station device in the group.

FIG. 1

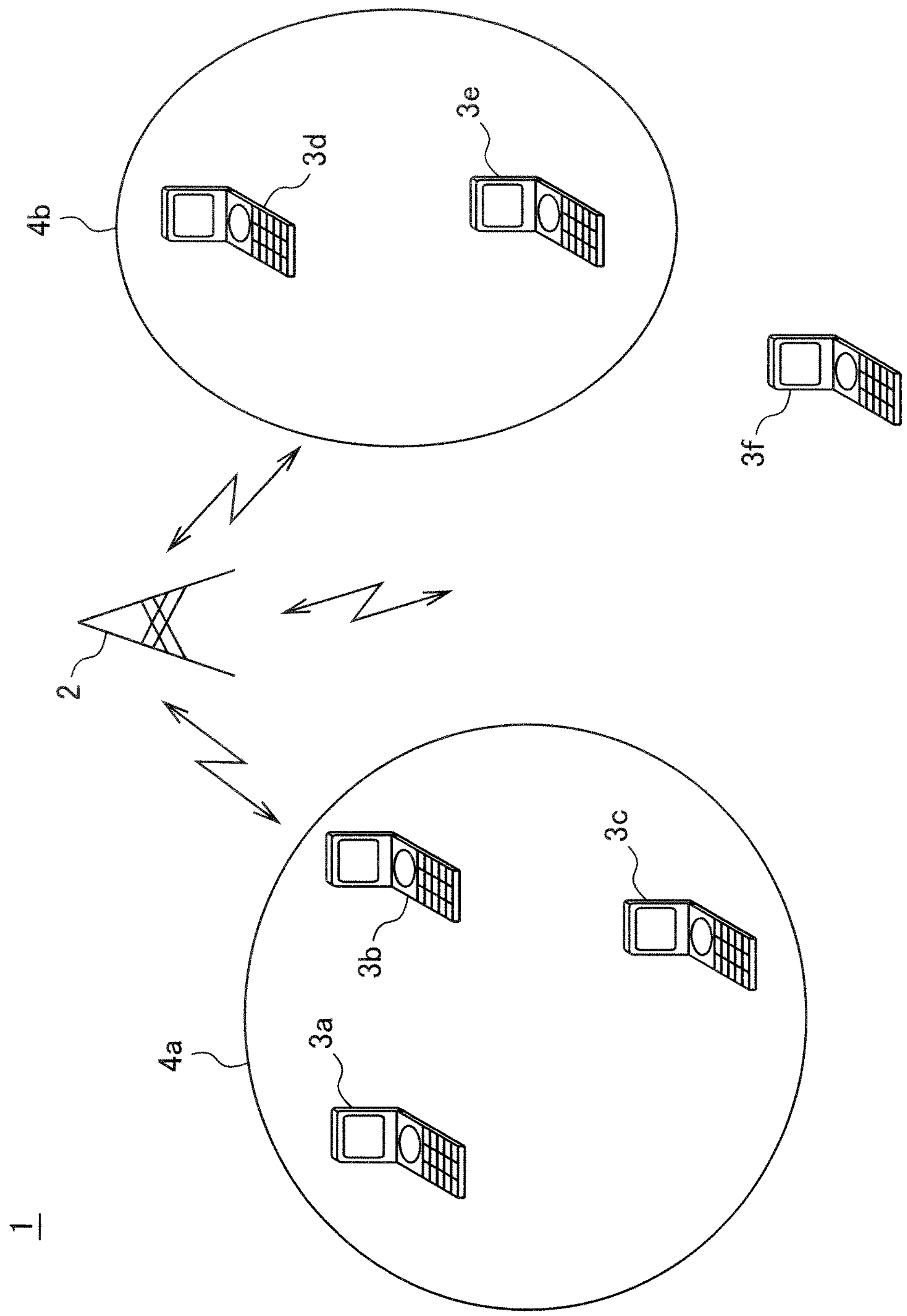

FIG.2

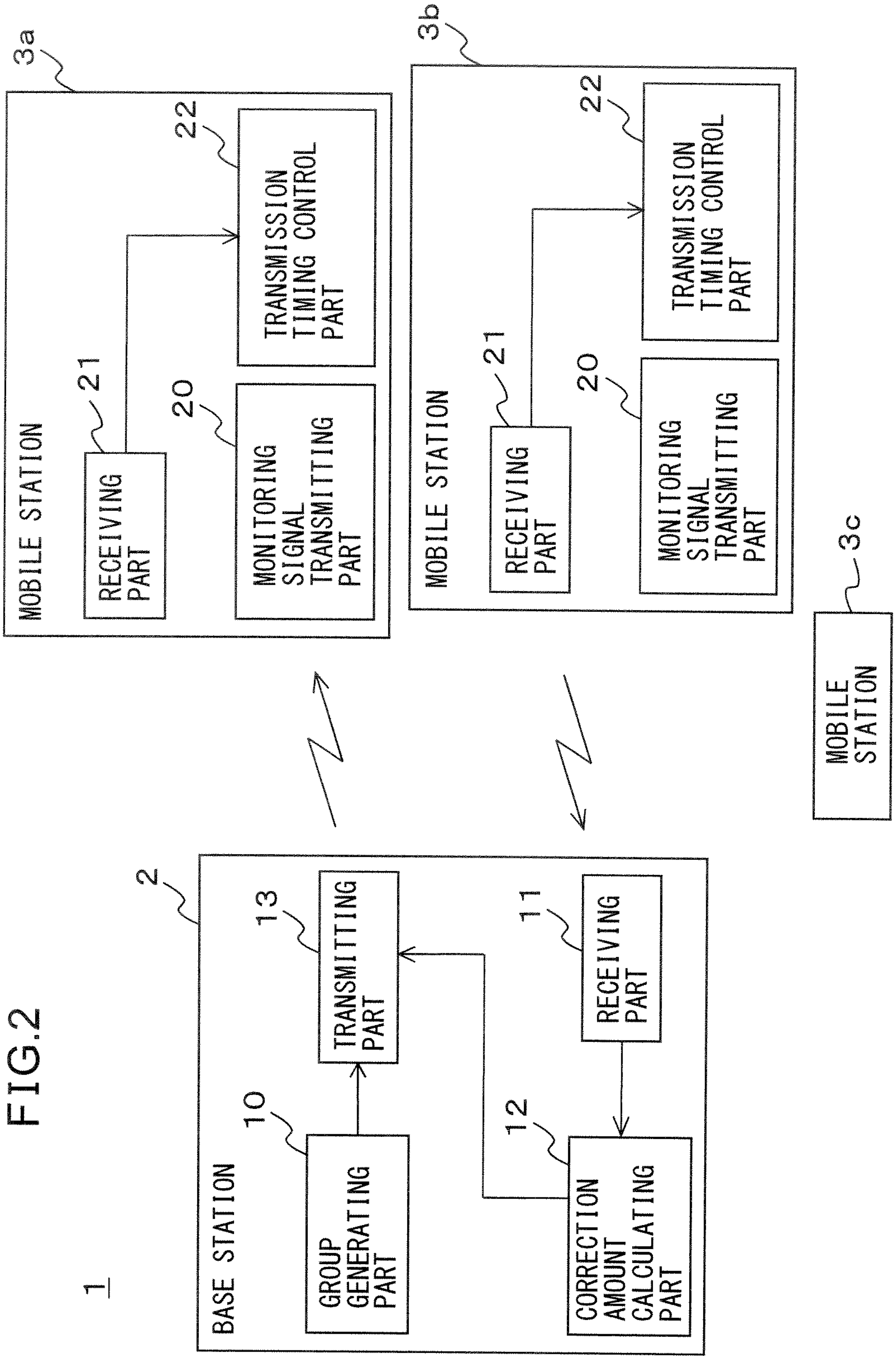
1
BASE STATION
2
GROUP GENERATING PART
10
TRANSMITTING PART
13
CORRECTION AMOUNT CALCULATING PART
12
RECEIVING PART
11
MOBILE STATION
3a
RECEIVING PART
21
MONITORING SIGNAL TRANSMITTING PART
20
TRANSMISSION TIMING CONTROL PART
22
MOBILE STATION
3b
RECEIVING PART
21
MONITORING SIGNAL TRANSMITTING PART
20
TRANSMISSION TIMING CONTROL PART
22
MOBILE STATION
3c

FIG.3

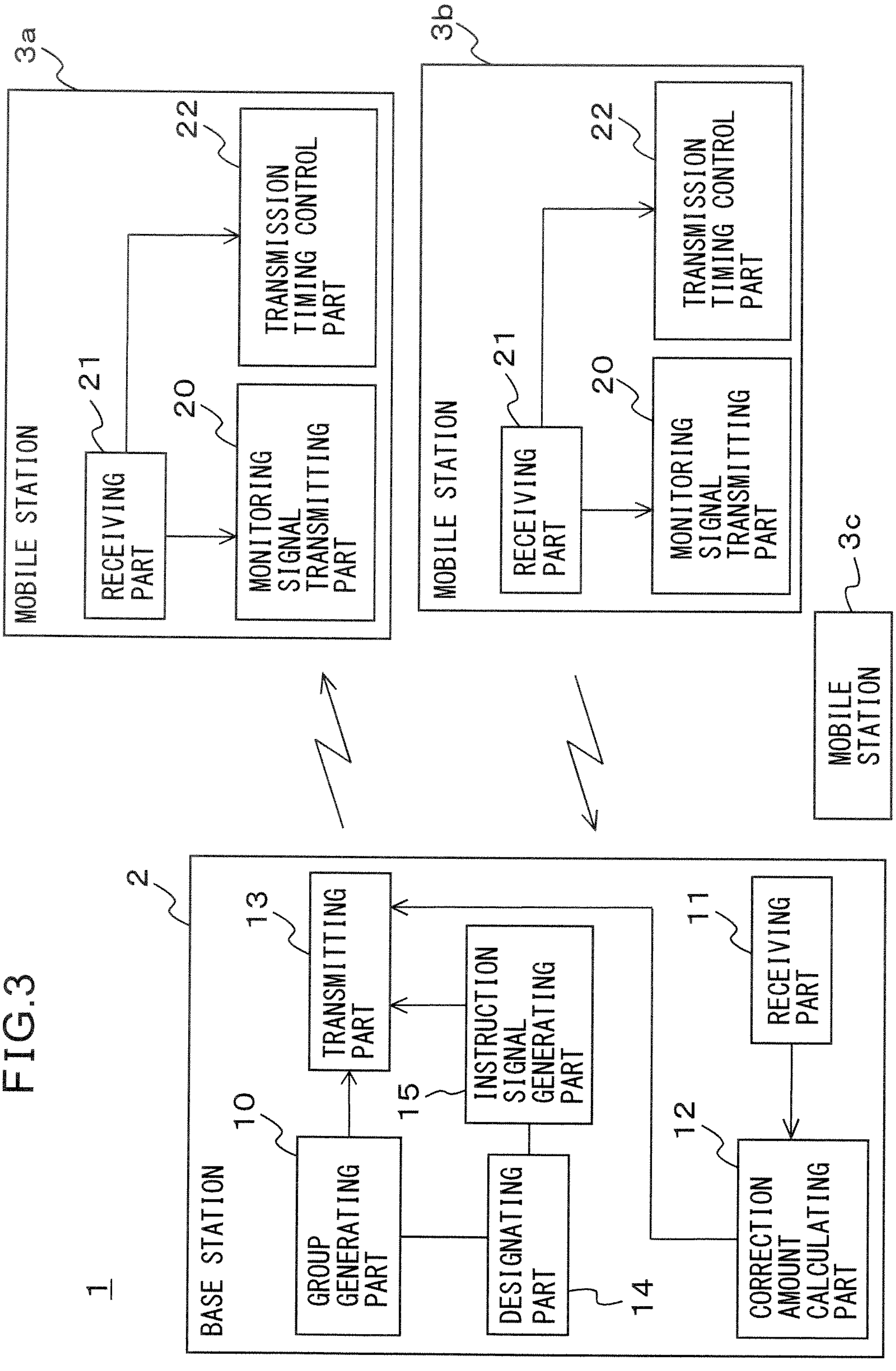
1
BASE STATION
2
GROUP GENERATING PART
10
TRANSMITTING PART
13
INSTRUCTION SIGNAL GENERATING PART
15
DESIGNATING PART
14
RECEIVING PART
11
CORRECTION AMOUNT CALCULATING PART
12
MOBILE STATION
3a
RECEIVING PART
21
MONITORING SIGNAL TRANSMITTING PART
20
TRANSMISSION TIMING CONTROL PART
22
MOBILE STATION
3b
RECEIVING PART
21
MONITORING SIGNAL TRANSMITTING PART
20
TRANSMISSION TIMING CONTROL PART
22
MOBILE STATION
3c

FIG.4

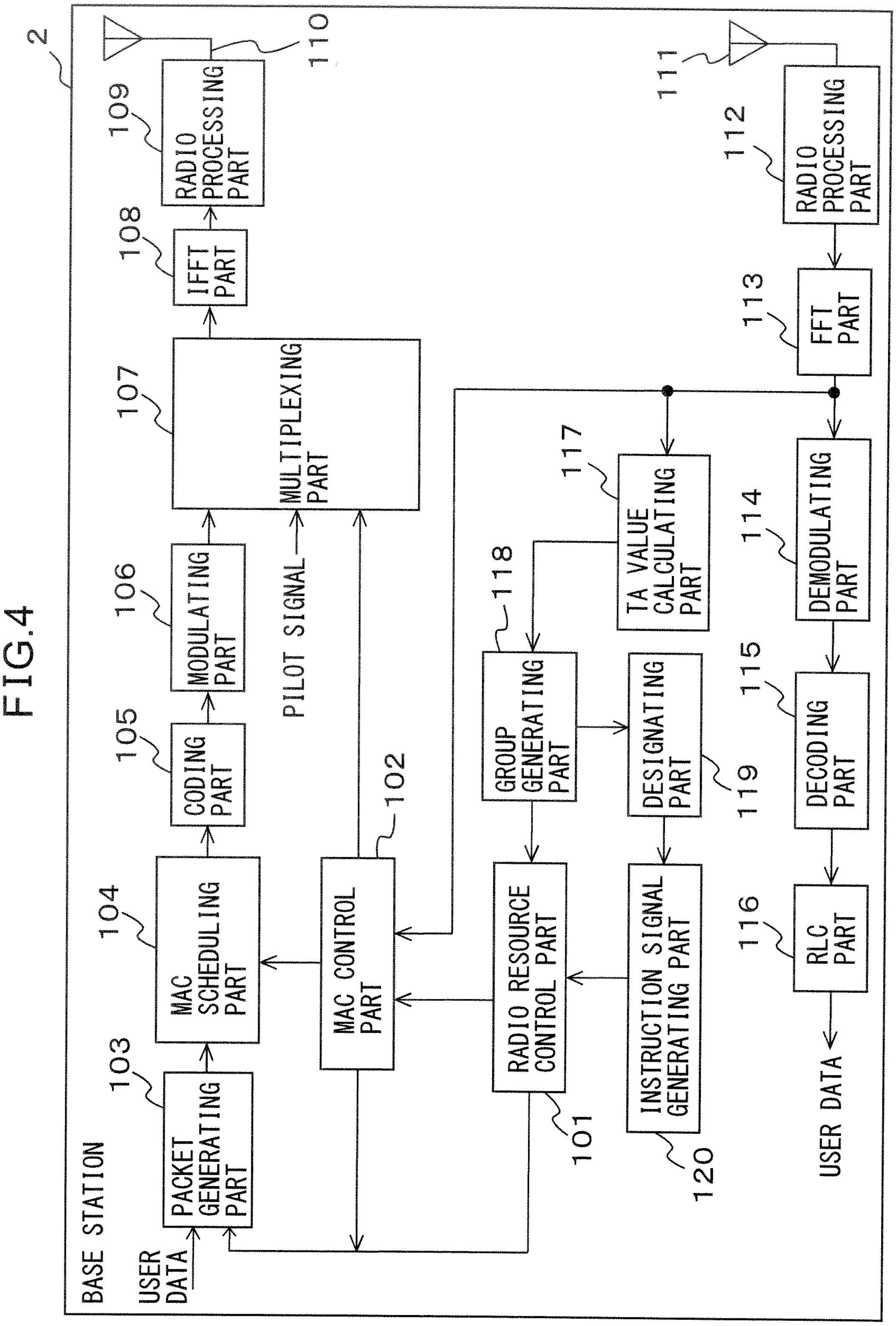
2
BASE STATION
USER DATA
PACKET GENERATING PART
103
MAC SCHEDULING PART
104
CODING PART
105
MODULATING PART
106
MULTIPLEXING PART
107
IFFT PART
108
RADIO PROCESSING PART
109
110
PILOT SIGNAL
MAC CONTROL PART
102
RADIO RESOURCE CONTROL PART
101
GROUP GENERATING PART
118
DESIGNATING PART
119
INSTRUCTION SIGNAL GENERATING PART
120
TA VALUE CALCULATING PART
117
111
RADIO PROCESSING PART
112
FFT PART
113
DEMODULATING PART
114
DECODING PART
115
RLC PART
116
USER DATA

FIG.5

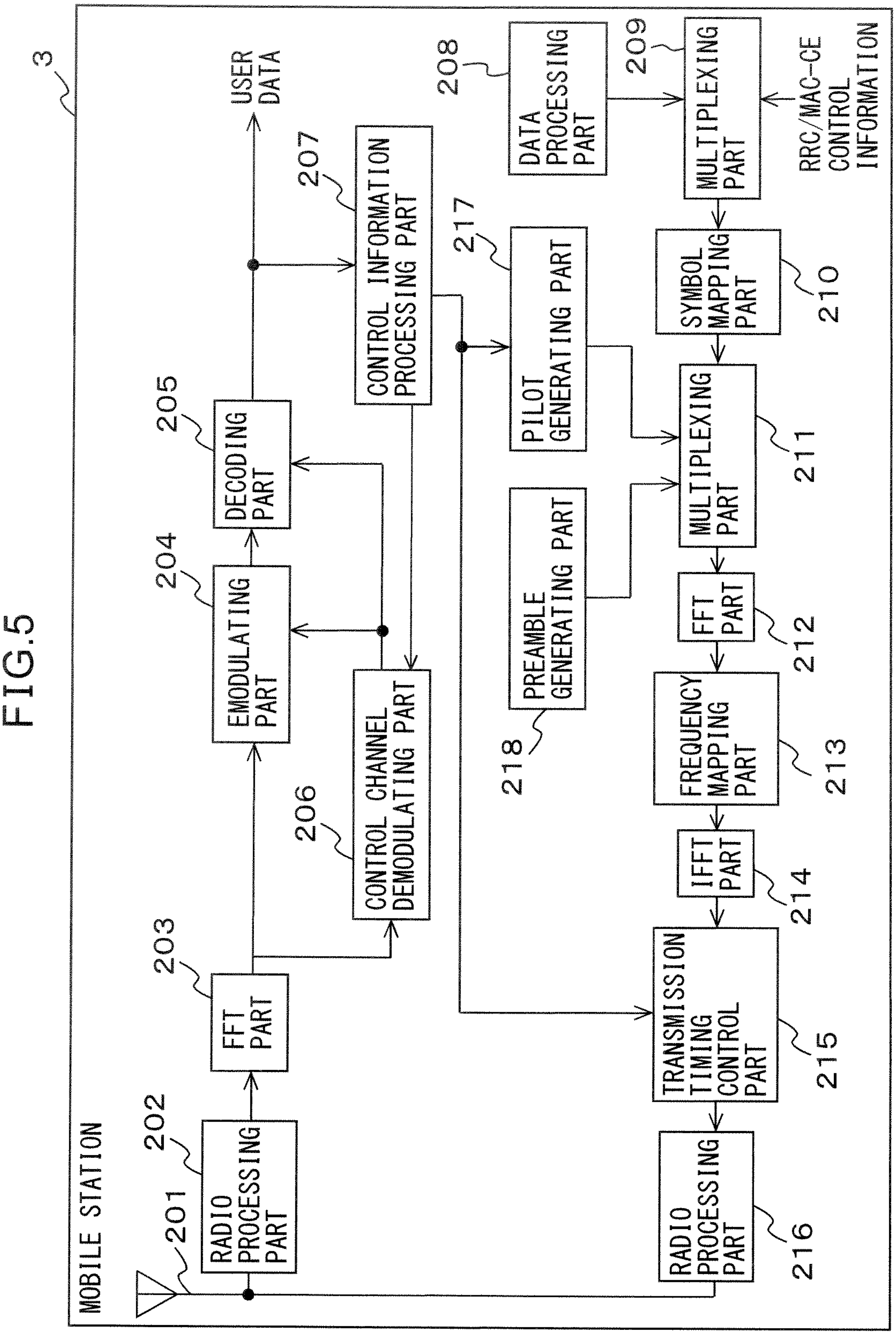
3
MOBILE STATION
201
202
RADIO PROCESSING PART
203
FFT PART
204
EMODULATING PART
205
DECODING PART
USER DATA
206
CONTROL CHANNEL DEMODULATING PART
207
CONTROL INFORMATION PROCESSING PART
208
DATA PROCESSING PART
209
MULTIPLEXING PART
RRC/MAC-CE CONTROL INFORMATION
210
SYMBOL MAPPING PART
217
PILOT GENERATING PART
218
PREAMBLE GENERATING PART
211
MULTIPLEXING PART
212
FFT PART
213
FREQUENCY MAPPING PART
214
IFFT PART
215
TRANSMISSION TIMING CONTROL PART
216
RADIO PROCESSING PART

FIG.6

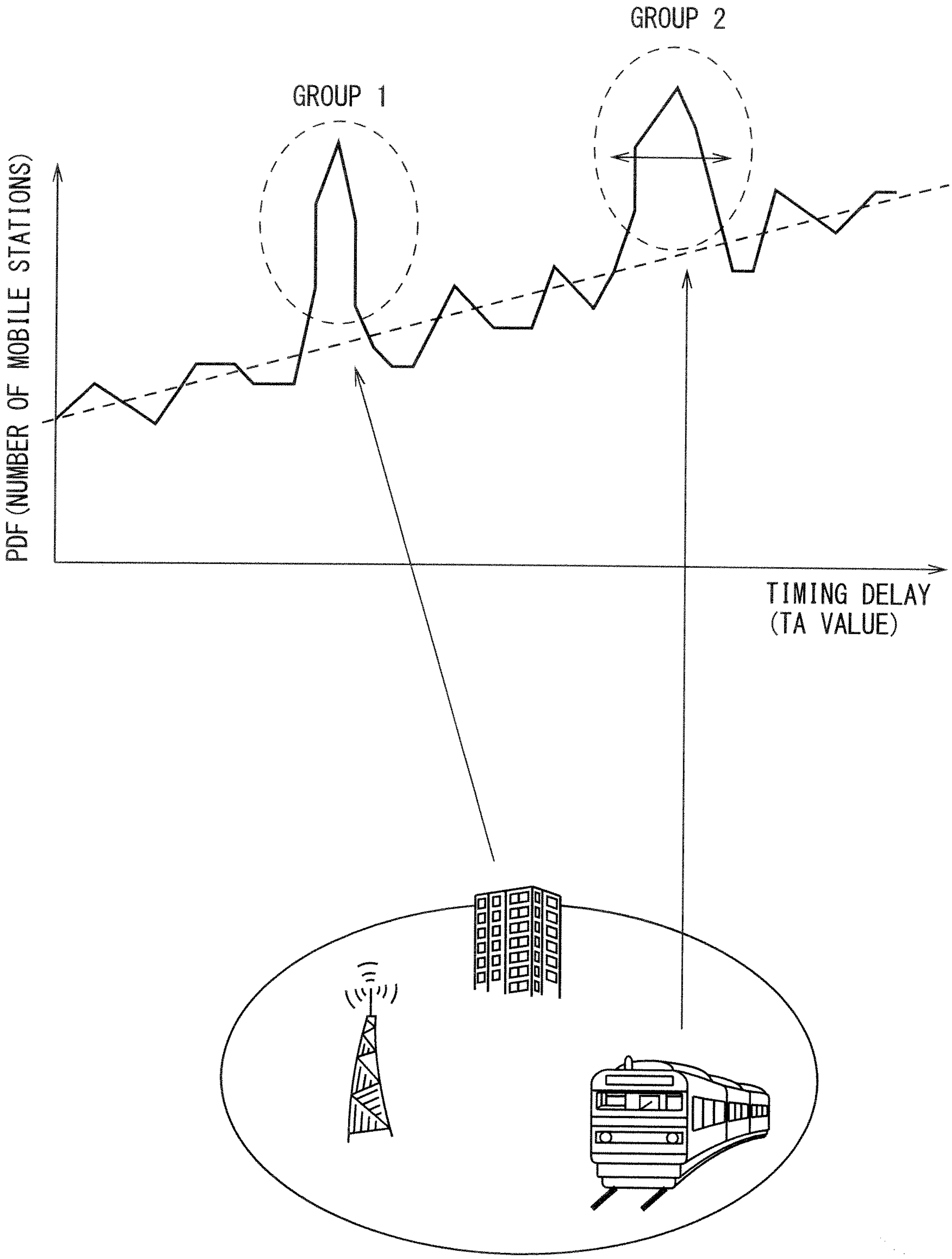
GROUP 1
GROUP 2
PDF (NUMBER OF MOBILE STATIONS)
TIMING DELAY
(TA VALUE)

FIG.7

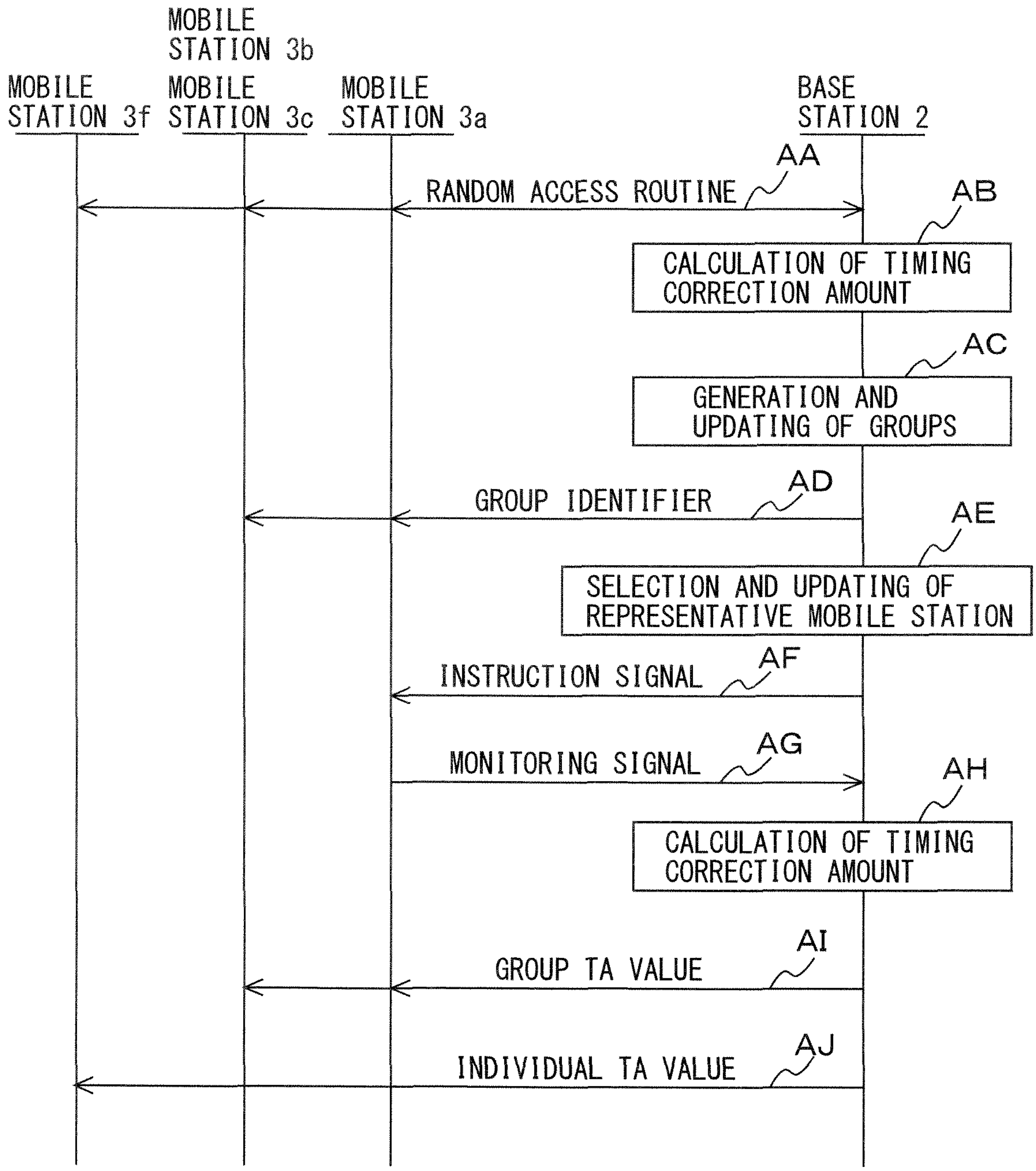
MOBILE STATION 3f
MOBILE STATION 3b
MOBILE STATION 3c
MOBILE STATION 3a
BASE STATION 2
AA
RANDOM ACCESS ROUTINE
AB
CALCULATION OF TIMING CORRECTION AMOUNT
AC
GENERATION AND UPDATING OF GROUPS
AD
GROUP IDENTIFIER
AE
SELECTION AND UPDATING OF REPRESENTATIVE MOBILE STATION
AF
INSTRUCTION SIGNAL
AG
MONITORING SIGNAL
AH
CALCULATION OF TIMING CORRECTION AMOUNT
AI
GROUP TA VALUE
AJ
INDIVIDUAL TA VALUE

FIG.8

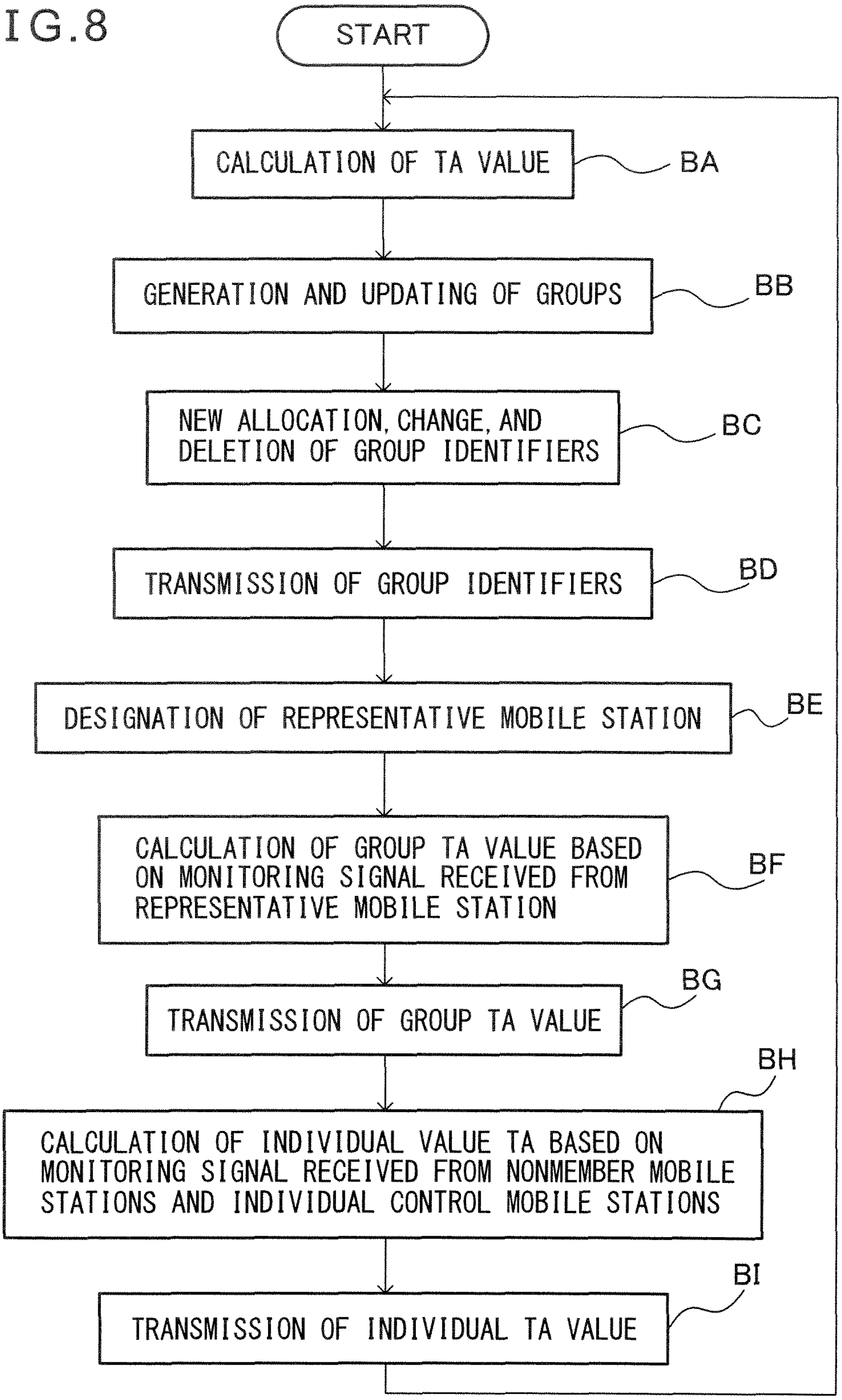
START
CALCULATION OF TA VALUE
BA
GENERATION AND UPDATING OF GROUPS
BB
NEW ALLOCATION, CHANGE, AND DELETION OF GROUP IDENTIFIERS
BC
TRANSMISSION OF GROUP IDENTIFIERS
BD
DESIGNATION OF REPRESENTATIVE MOBILE STATION
BE
CALCULATION OF GROUP TA VALUE BASED ON MONITORING SIGNAL RECEIVED FROM REPRESENTATIVE MOBILE STATION
BF
TRANSMISSION OF GROUP TA VALUE
BG
CALCULATION OF INDIVIDUAL VALUE TA BASED ON MONITORING SIGNAL RECEIVED FROM NONMEMBER MOBILE STATIONS AND INDIVIDUAL CONTROL MOBILE STATIONS
BH
TRANSMISSION OF INDIVIDUAL TA VALUE
BI

FIG.9A

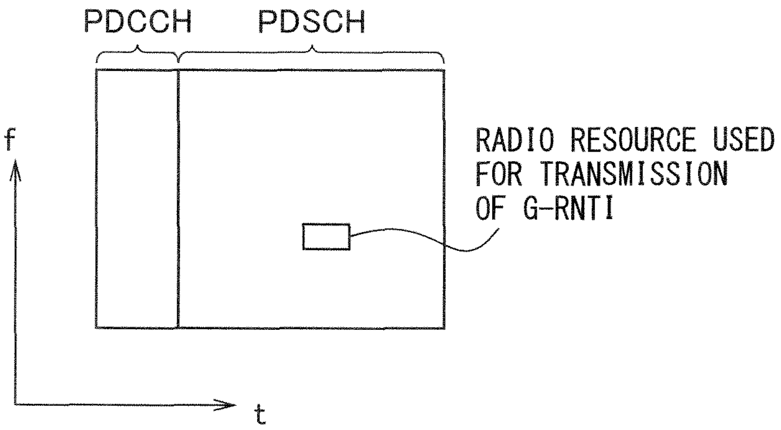
PDCCH
PDSCH
f
t
RADIO RESOURCE USED FOR TRANSMISSION OF G-RNTI

FIG.9B

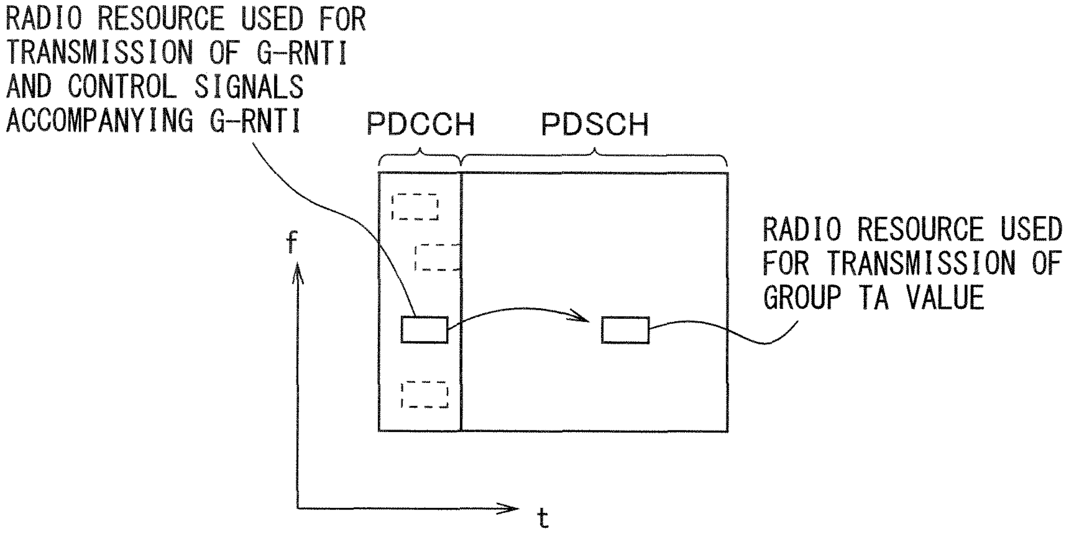
RADIO RESOURCE USED FOR TRANSMISSION OF G-RNTI AND CONTROL SIGNALS ACCOMPANYING G-RNTI
PDCCH
PDSCH
f
t
RADIO RESOURCE USED FOR TRANSMISSION OF GROUP TA VALUE

FIG.10

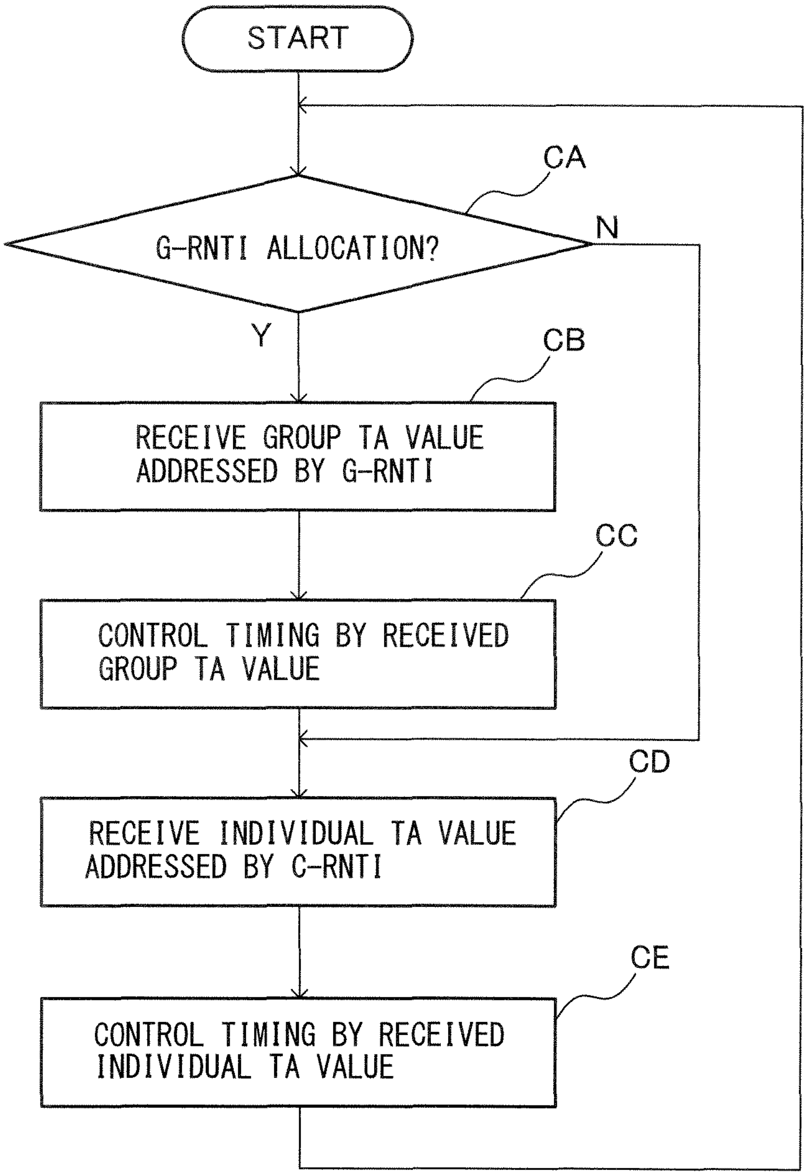
START
CA
G-RNTI ALLOCATION?
N
Y
CB
RECEIVE GROUP TA VALUE ADDRESSED BY G-RNTI
CC
CONTROL TIMING BY RECEIVED GROUP TA VALUE
CD
RECEIVE INDIVIDUAL TA VALUE ADDRESSED BY C-RNTI
CE
CONTROL TIMING BY RECEIVED INDIVIDUAL TA VALUE

FIG.11

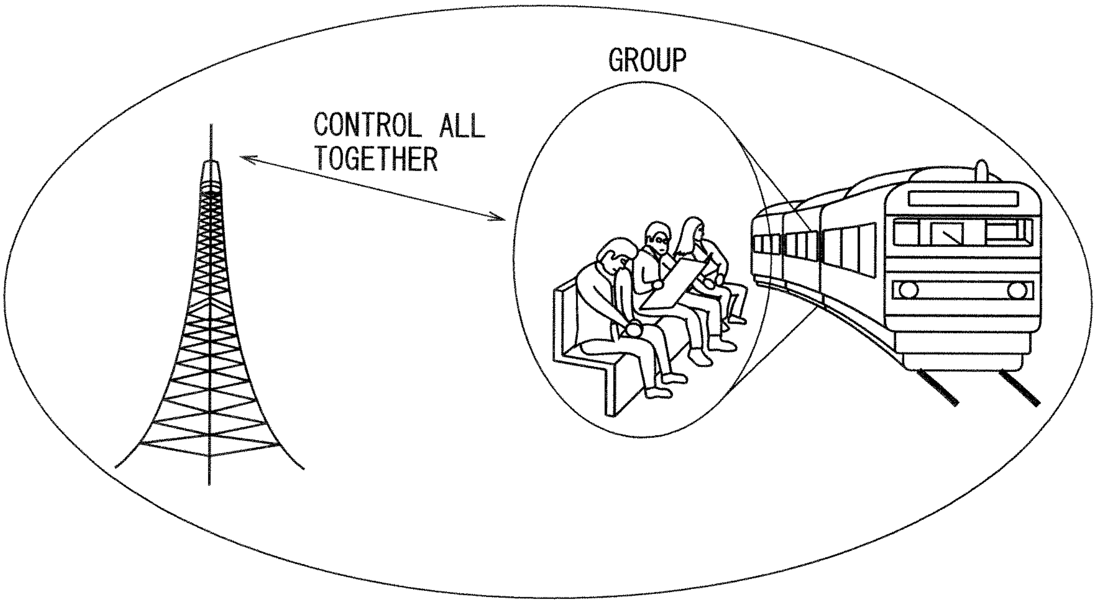

FIG.12

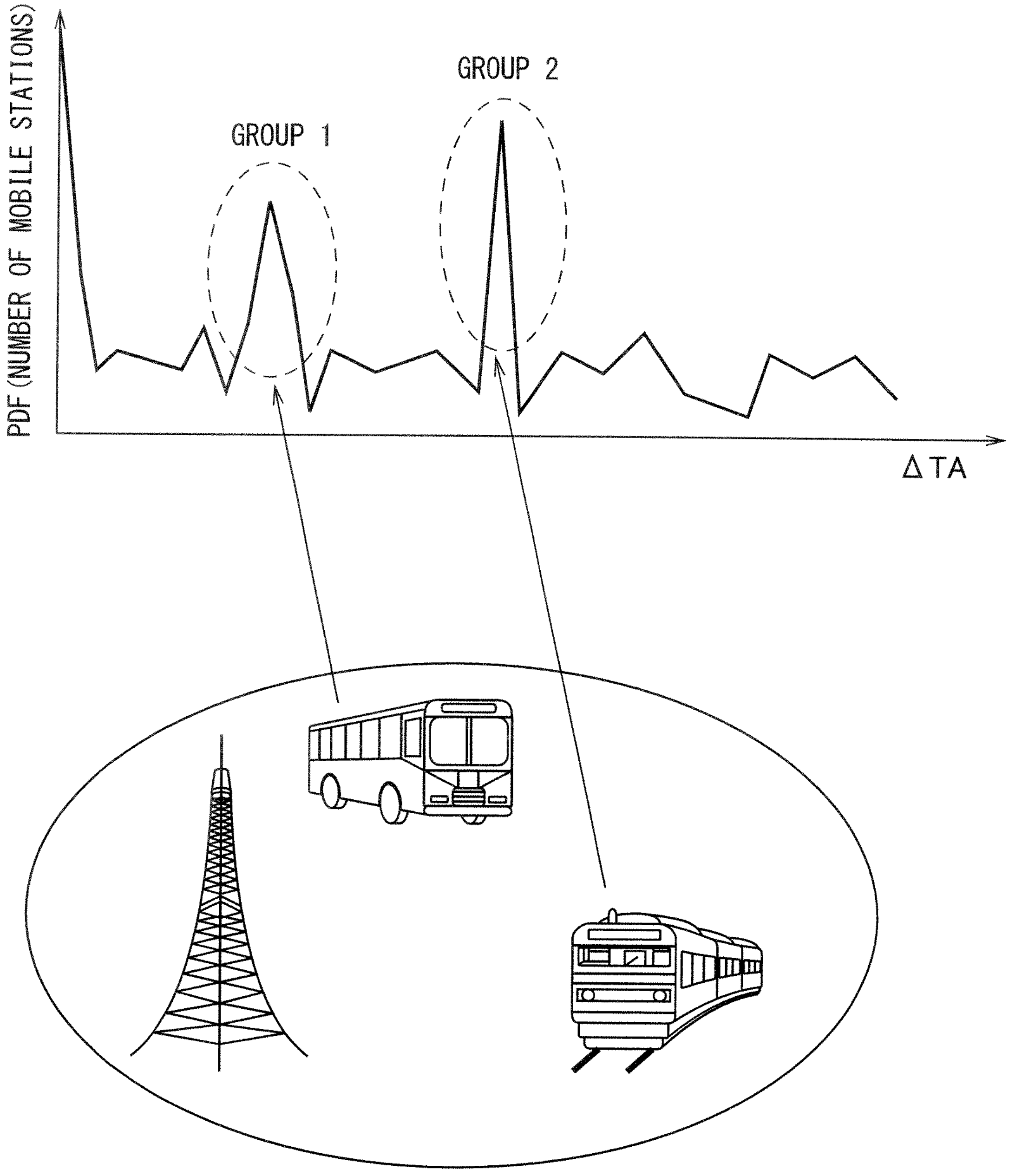

FIG.13

| | | | | | | |
|---|---|---|---|---|---|---|
| ID1 | TA OF GROUP 1 | ID2 | TA OF GROUP 2 | ··· | IDn | TA OF GROUP n |

FIG.14A

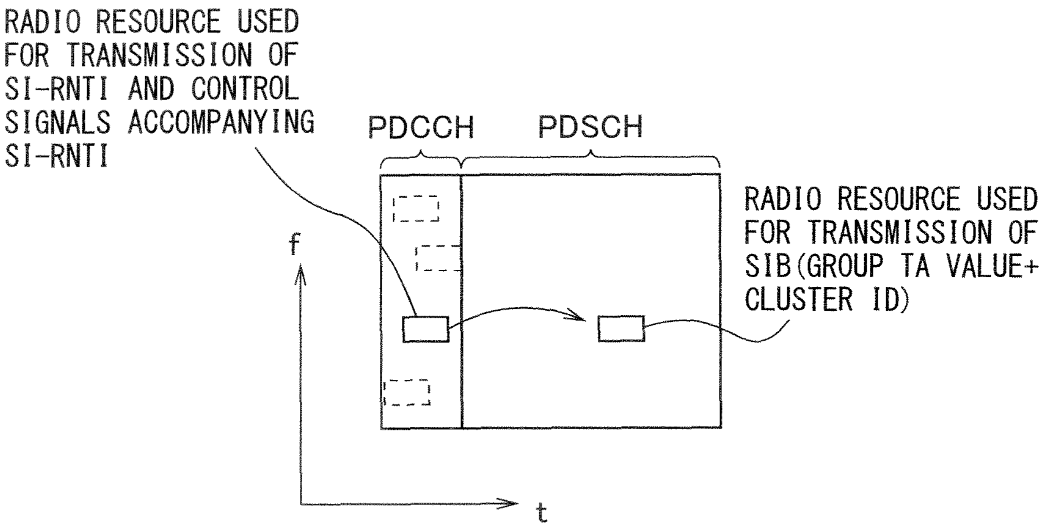


FIG.14B

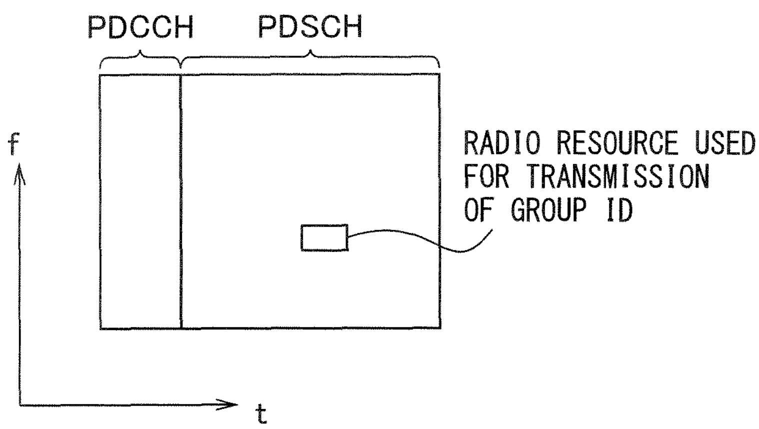

FIG.15

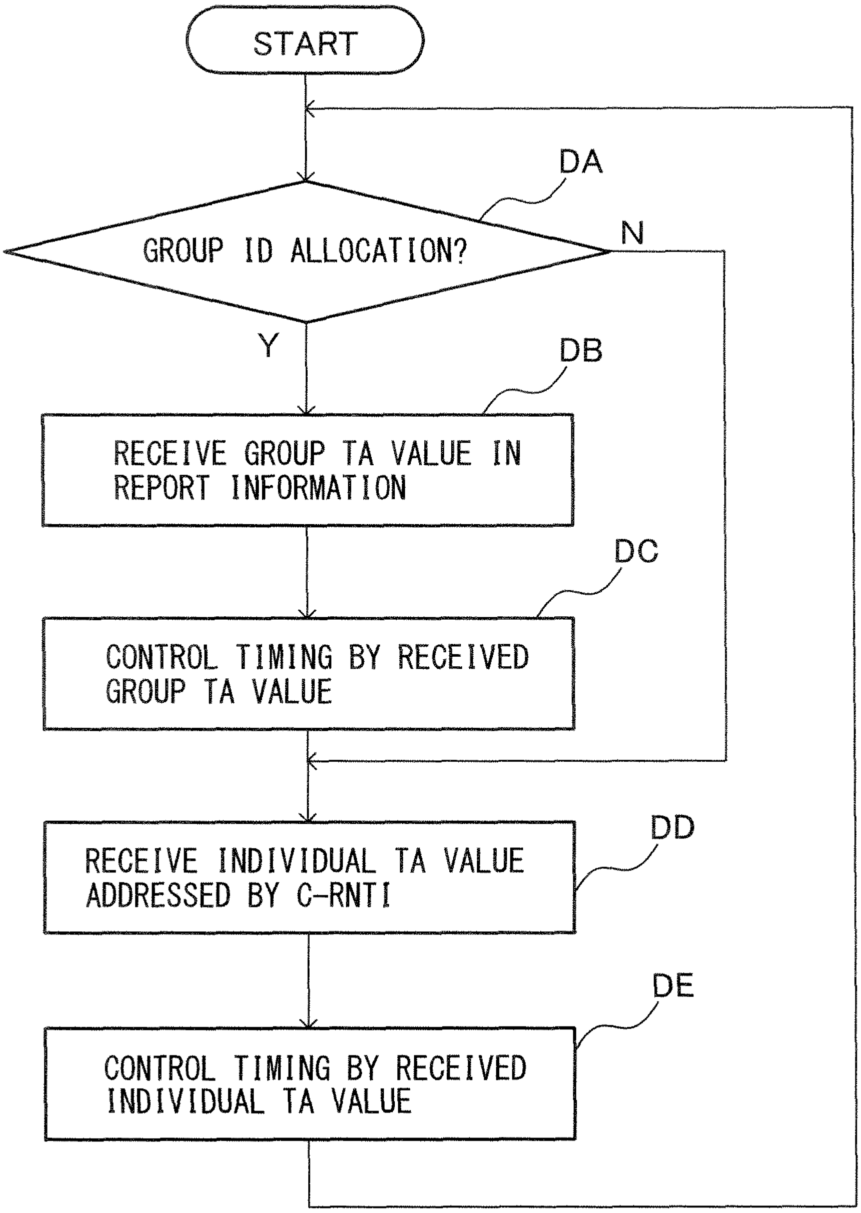
START
DA
GROUP ID ALLOCATION?
N
Y
DB
RECEIVE GROUP TA VALUE IN REPORT INFORMATION
DC
CONTROL TIMING BY RECEIVED GROUP TA VALUE
DD
RECEIVE INDIVIDUAL TA VALUE ADDRESSED BY C-RNTI
DE
CONTROL TIMING BY RECEIVED INDIVIDUAL TA VALUE

FIG.16A

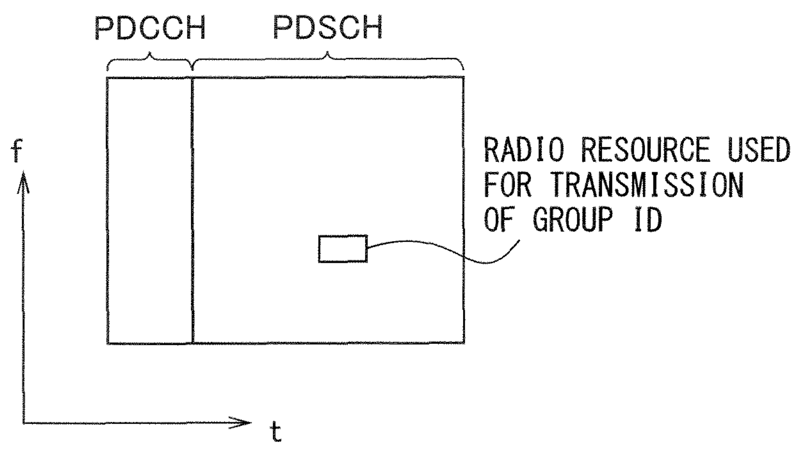


FIG.16B

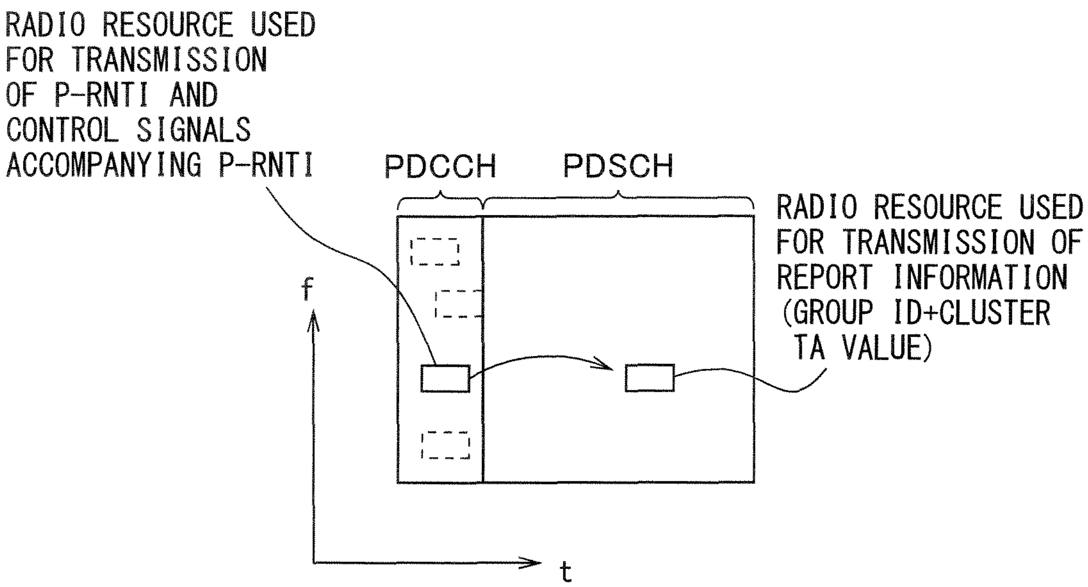

FIG.17A

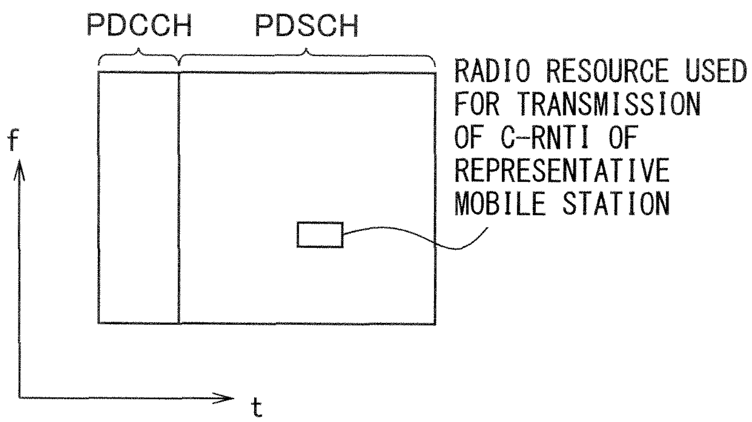


FIG.17B

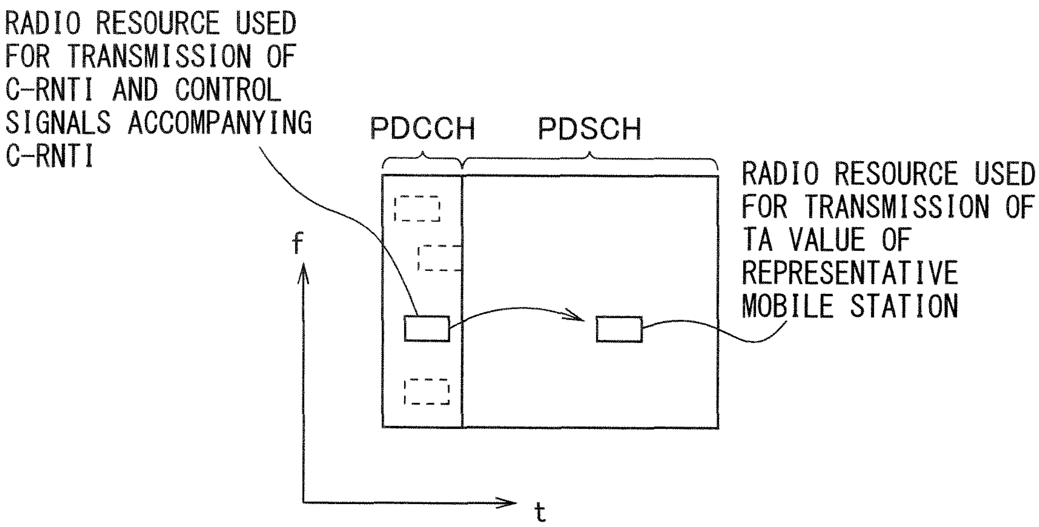

FIG.18

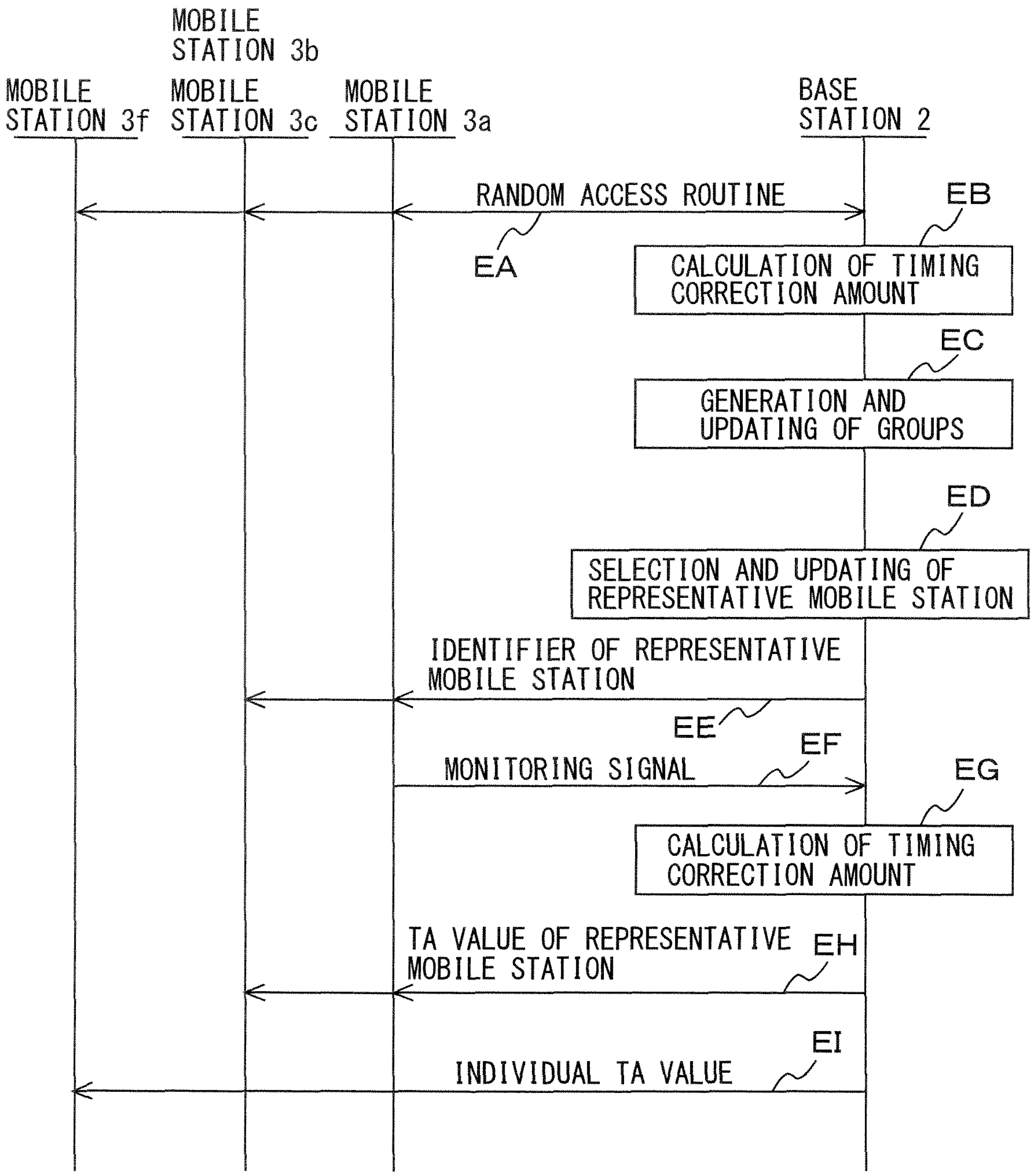
MOBILE STATION 3b
MOBILE STATION 3f
MOBILE STATION 3c
MOBILE STATION 3a
BASE STATION 2
RANDOM ACCESS ROUTINE
EA
EB
CALCULATION OF TIMING CORRECTION AMOUNT
EC
GENERATION AND UPDATING OF GROUPS
ED
SELECTION AND UPDATING OF REPRESENTATIVE MOBILE STATION
IDENTIFIER OF REPRESENTATIVE MOBILE STATION
EE
EF
MONITORING SIGNAL
EG
CALCULATION OF TIMING CORRECTION AMOUNT
TA VALUE OF REPRESENTATIVE MOBILE STATION
EH
EI
INDIVIDUAL TA VALUE

FIG.19

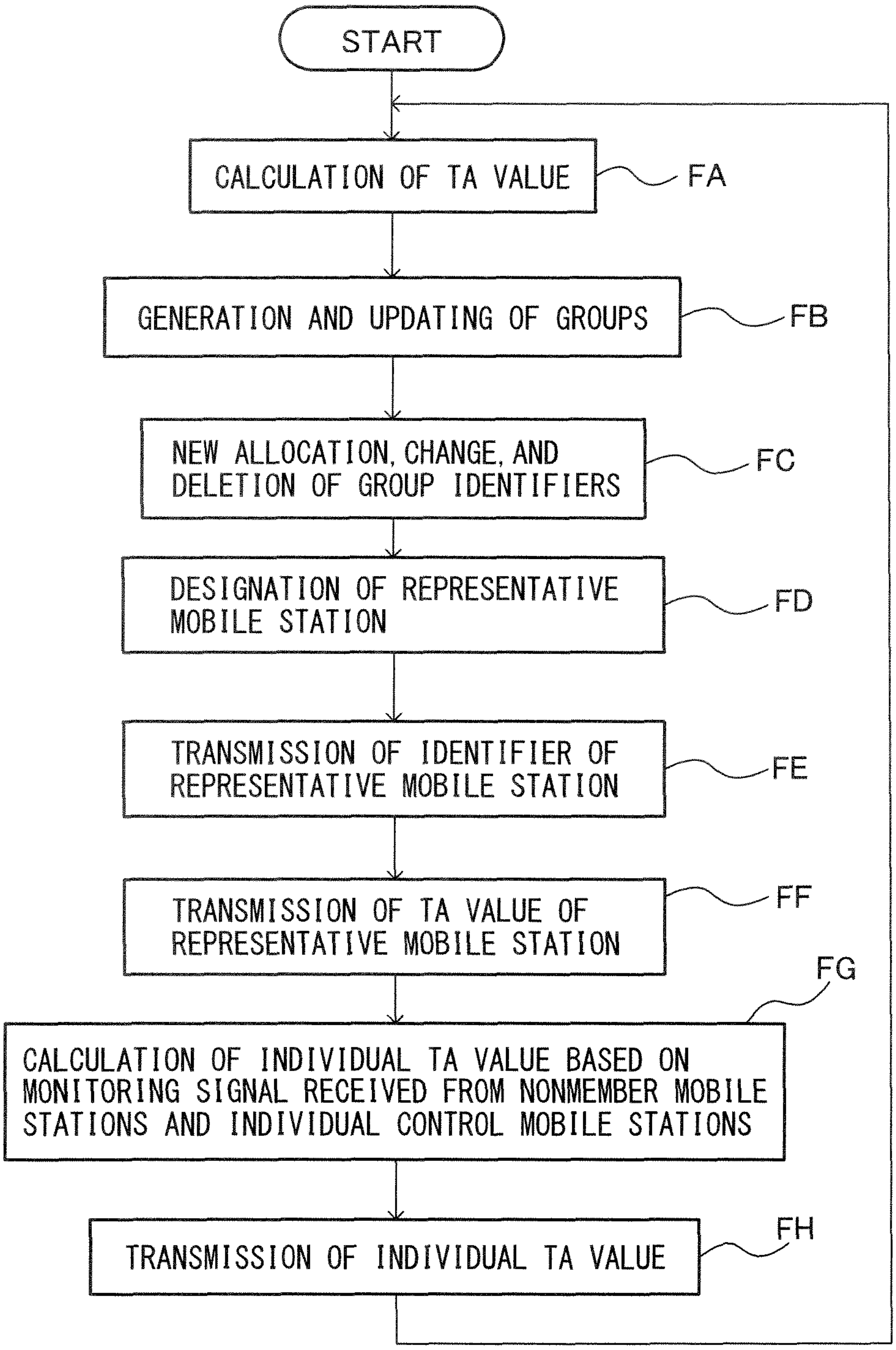
START
CALCULATION OF TA VALUE
FA
GENERATION AND UPDATING OF GROUPS
FB
NEW ALLOCATION, CHANGE, AND DELETION OF GROUP IDENTIFIERS
FC
DESIGNATION OF REPRESENTATIVE MOBILE STATION
FD
TRANSMISSION OF IDENTIFIER OF REPRESENTATIVE MOBILE STATION
FE
TRANSMISSION OF TA VALUE OF REPRESENTATIVE MOBILE STATION
FF
CALCULATION OF INDIVIDUAL TA VALUE BASED ON MONITORING SIGNAL RECEIVED FROM NONMEMBER MOBILE STATIONS AND INDIVIDUAL CONTROL MOBILE STATIONS
FG
TRANSMISSION OF INDIVIDUAL TA VALUE
FH

FIG.20

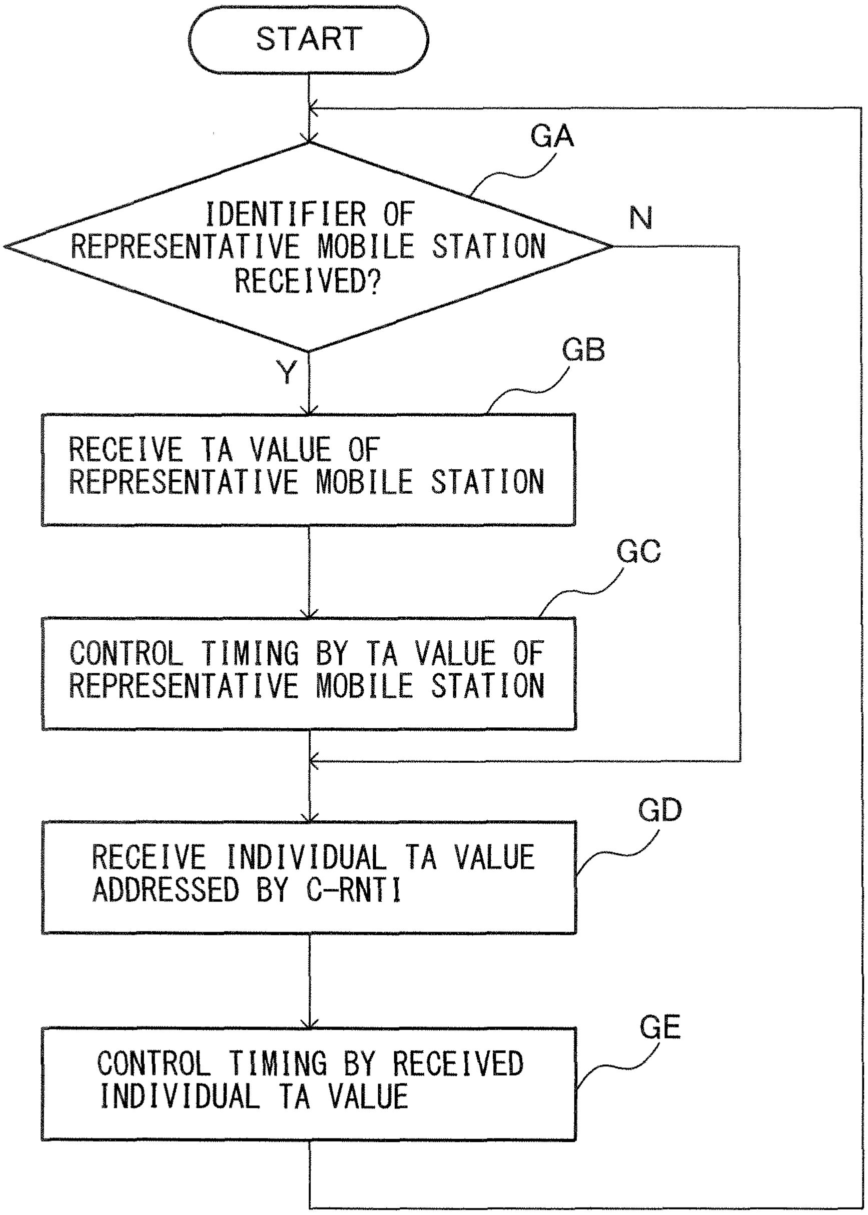
START
GA
IDENTIFIER OF REPRESENTATIVE MOBILE STATION RECEIVED?
N
Y
GB
RECEIVE TA VALUE OF REPRESENTATIVE MOBILE STATION
GC
CONTROL TIMING BY TA VALUE OF REPRESENTATIVE MOBILE STATION
GD
RECEIVE INDIVIDUAL TA VALUE ADDRESSED BY C-RNTI
GE
CONTROL TIMING BY RECEIVED INDIVIDUAL TA VALUE

FIG.21

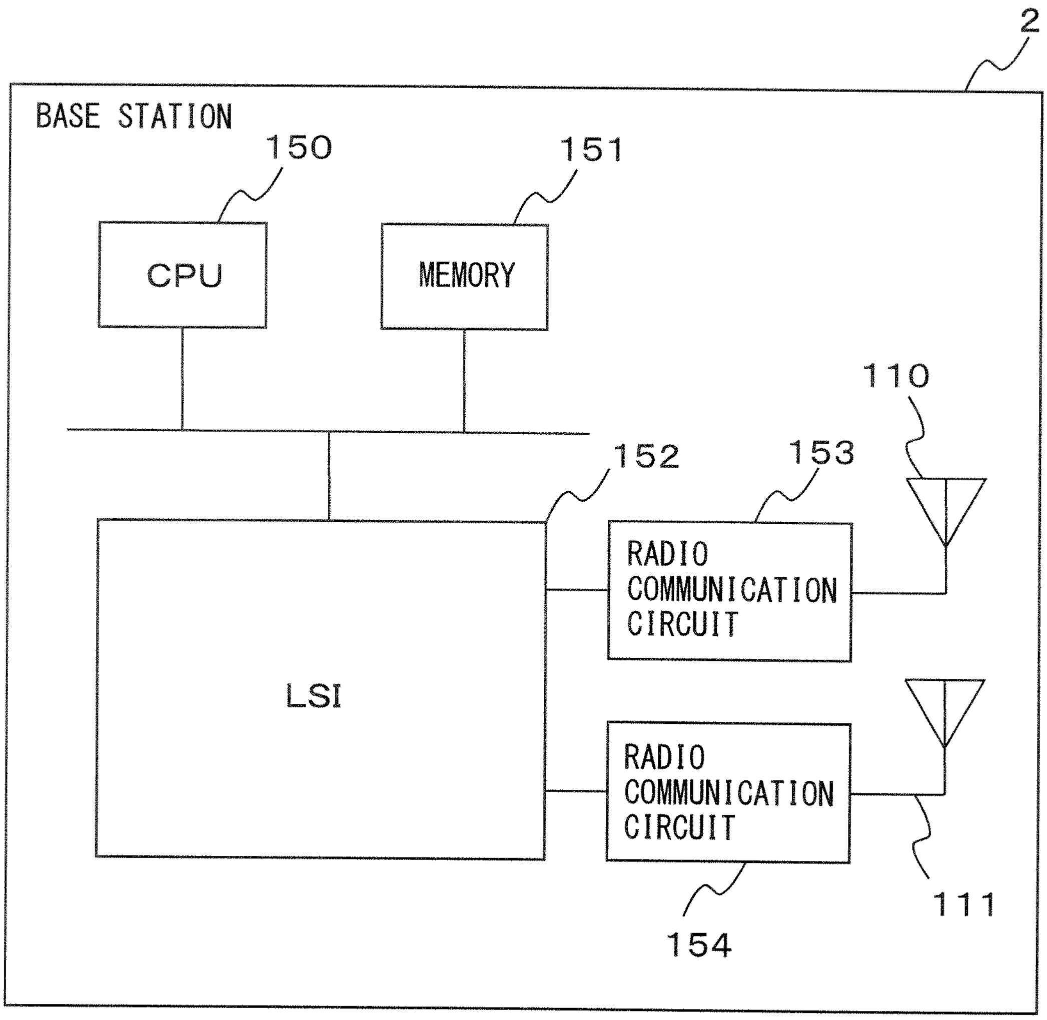
2
BASE STATION
150
151
CPU
MEMORY
110
152
153
RADIO
COMMUNICATION
CIRCUIT
LSI
RADIO
COMMUNICATION
CIRCUIT
154
111

FIG.22

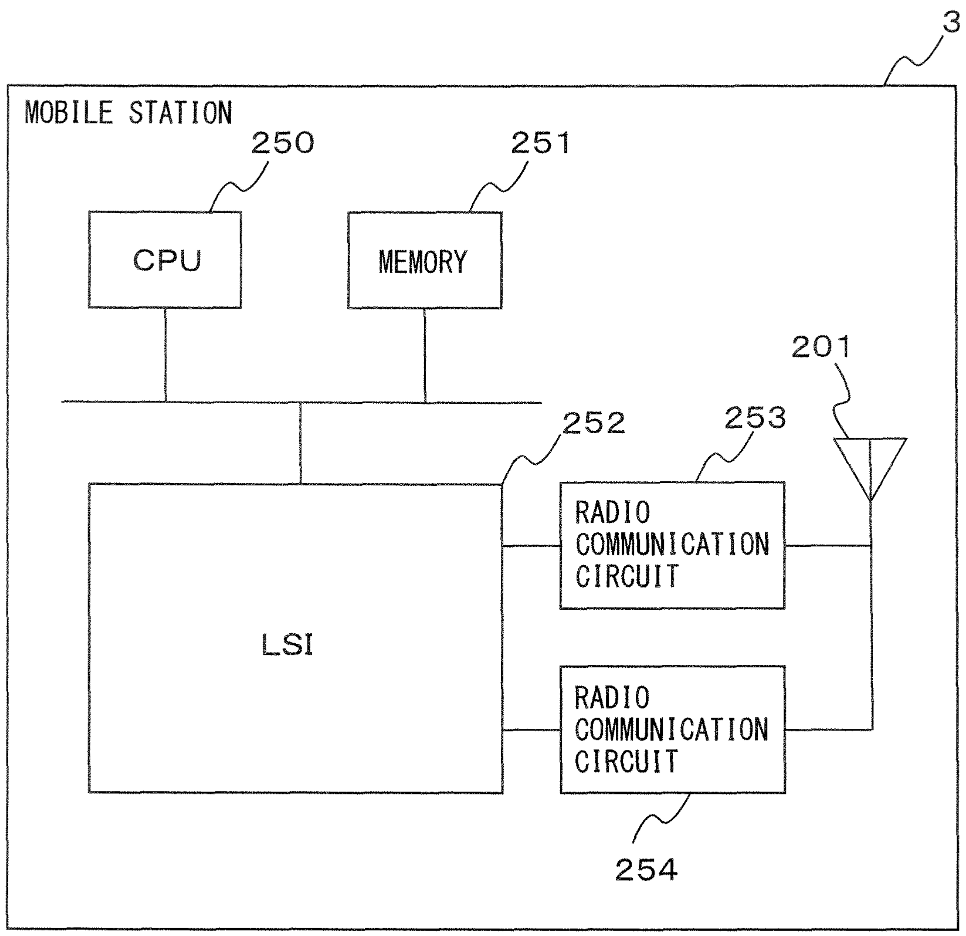
3
MOBILE STATION
250
251
CPU
MEMORY
201
252
253
LSI
RADIO COMMUNICATION CIRCUIT
RADIO COMMUNICATION CIRCUIT
254

FIG.23

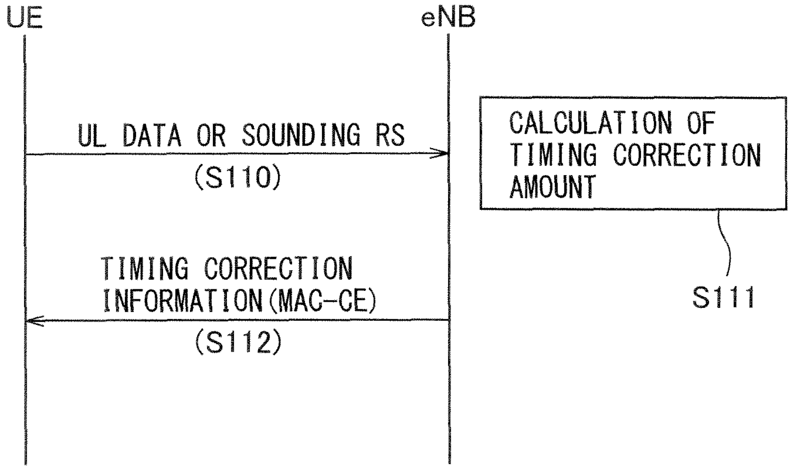
UE
eNB
UL DATA OR SOUNDING RS
(S110)
CALCULATION OF TIMING CORRECTION AMOUNT
S111
TIMING CORRECTION INFORMATION(MAC-CE)
(S112)

FIG.24

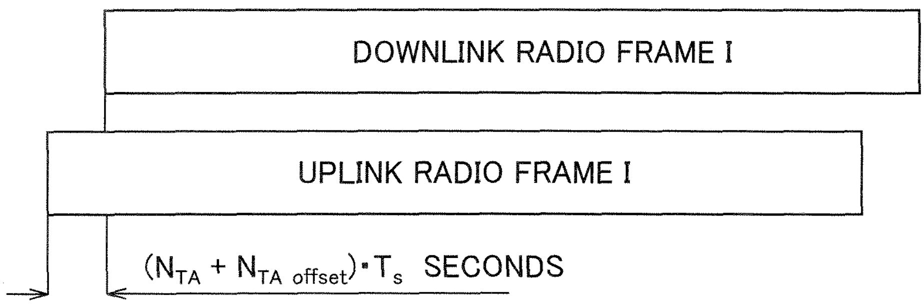
DOWNLINK RADIO FRAME I
UPLINK RADIO FRAME I
(N_TA + N_TA offset)·T_s SECONDS

**INTERNATIONAL SEARCH REPORT**

International application No.
PCT/JP2012/069019

A. CLASSIFICATION OF SUBJECT MATTER
*H04W56/00*(2009.01)i, *H04W74/08*(2009.01)i

According to International Patent Classification (IPC) or to both national classification and IPC

B. FIELDS SEARCHED

Minimum documentation searched (classification system followed by classification symbols)
H04W4/00-99/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-257641 A (Lucent Technologies Inc.), 21 September 2001 (21.09.2001), paragraph [0043]; fig. 1<br>& EP 1124347 A2 & AU 1827201 A<br>& CN 1314747 A & BR 100361 A<br>& US 6967936 B1 & CA 2331225 A<br>& KR 10-2001-0082061 A | 1-15 |
| A | WO 2009/022473 A1 (Panasonic Corp.), 19 February 2009 (19.02.2009), paragraphs [0151] to [0160]<br>& US 2011/0273997 A1 & EP 2190227 A1<br>& CN 101779509 A & JP 2009-528039 A | 1-15 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 October, 2012 (04.10.12) | 16 October, 2012 (16.10.12) |

| Name and mailing address of the ISA/ | Authorized officer |
|---|---|
| Japanese Patent Office | |
| Facsimile No. | Telephone No. |

Form PCT/ISA/210 (second sheet) (July 2009)